# EUROPÄISCHE PATENTSCHRIFT

(11) **EP 0 407 847 B1**
(45) Veröffentlichungstag und Bekanntmachung des Hinweises auf die Patenterteilung: **01.12.1993**
(21) Anmeldenummer: 90112564.1
(22) Anmeldetag: 02.07.1990
(51) Int. Cl.: B29C 47/20, B29C 47/06

(54) **Verfahren und Vorrichtung zum Herstellen von Hohlkörpern aus thermoplastischem Kunststoff**
Method and apparatus for manufacturing hollow thermoplastic bodies
Procédé et dispositif pour produire des corps creux en matière thermoplastique

(30) Priorität: 12.07.1989 DE 3922883
(43) Veröffentlichungstag der Anmeldung: 16.01.1991
(73) Patentinhaber: Krupp Kautex Maschinenbau GmbH, 53229 Bonn (DE)
(72) Erfinder: Daubenbüchel, Werner, Dipl.-Ing., D-5060 Bergisch-gladbach 4 (DE); Eiselen, Otto, Dipl.-Ing., D-5330 Königswinter 41 (DE); Friedrichs, Karsten, Dipl.-Ing., D-5340 Bad Honnef (DE); Hess, Dieter, Dipl.-Ing., D-5357 Swisttal 3 (DE); Kiefer, Erich, Dipl.Ing., D-5300 Bonn 3 (DE); Klüsener, Peter, Dipl.-Ing., D-5300 Bonn 2 (DE)
(74) Vertreter: Koepsell, Helmut, Dipl.-Ing.

(56) Entgegenhaltungen:
- EP-A- 0 026 828
- EP-A- 0 158 814
- EP-A- 0 249 866
- WO-A-88/02689
- DE-A- 1 813 421
- FR-A- 1 293 637
- FR-A- 2 299 957
- US-A- 3 375 552
- US-A- 3 386 132
- US-A- 3 759 648
- US-A- 4 548 569
- PATENT ABSTRACTS OF JAPAN, Band 13, Nr. 55 (M-795)[3403], 8. Februar 1989; & JP-A-63 260 418 (MAZDA MOTOR CORP.) 27-10-1988

## Beschreibung

Die Erfindung betrifft ein Verfahren und eine Vorrichtung zum Herstellen von Hohlkörpern aus thermoplastischem Kunststoff, deren Wandung aus einem wenigstens zwei Schichten aufweisenden Laminat besteht, mittels Extrusionsblasformen, bei welchem Verfahren zunächst Vorformlinge, deren Wandung eine entsprechende Anzahl von Schichten aufweist, absatzweise hergestellt werden unter Verwendung einer Extrusionseinheit, die wenigstens zwei kontinuierlich laufende Extruder und einen gemeinsamen Extrusionskopf aufweist, wobei die Extrusionseinheit mit einem Speicherraum zum Speichern von in den Extrudern plastifizierten Materialien und mit zwischen zwei Endpositionen hubartig hin- und herbewegbaren Mitteln zum Entleeren dieses Speicherraumes zur Bildung eines Vorformlings versehen ist und Materialströme, deren Anzahl der Anzahl der Schichten in der Wandung des Hohlkörpers entspricht, im Bereich des Extrusionskopfes derart zusammengeführt werden, daß einander benachbarte Materialströme in einem Laminatbildungsbereich miteinander zu einem Laminat für die Wandung des Vorformlings verbunden werden, welches Laminat durch einen Verbindungskanal innerhalb des Extrusionskopfes zu der in einem Abstand vom Speicherraum befindlichen Austrittsöffnung vorbewegt wird, und aus der Austrittsöffnung ein Gesamt-Volumenabschnitt des Laminats zur Bildung des Vorformlings ausgestoßen wird, der zwei Volumen-Endabschnitte und einen Volumen-Mittelabschnitt aufweist, wobei zumindest ein Teilbereich des Volumen-Mittelabschnittes innerhalb des Formnestes einer unterteilten Blasform unter innerem Überdruck aufgeweitet wird und die Endabschnitte des Volumen-Gesamtabschnittes als Überschußmaterial durch einen Abquetschvorgang abgequetscht werden, an welchem Blasformteile teilnehmen, und das Überschußmaterial außerhalb des Formnestes verbleibt. Dabei ist das Mittel zum Entleeren des Speicherraums im allgemeinen als Ringkolben ausgebildet. Deshalb wird zur Vereinfachung im folgenden überwiegend von einem Ringkolben gesprochen, ohne daß damit eine Einschränkung verbunden sein soll.

Es ist aus der DE-OS 36 35 334 bekannt, zunächst die einzelnen Materialströme innerhalb des Ringkolbens des Extrusionskopfes in eine im Querschnitt ringförmige Gestalt zu bringen und die Materialströme dann innerhalb des Ringkolbens zum Laminat zusammenzuführen und dieses Laminat durch einen Ringkanal in den Speicherraum zu leiten, so daß die Kunststoffmaterialien zur Herstellung des Vorformlinges bereits in Laminatform gespeichert werden und beim darauffolgenden Entleerungshub durch den Ringkolben das bereits gebildete Laminat in Richtung auf die Austrittsöffnung verdrängt wird.

Die DE-OS 36 20 144 offenbart einen Extrusionskopf, bei welchem die von den Extrudern kommenden Materialströme durch Ringkanäle, die in einem stationär angeordneten Bauteil des Extrusionskopfes vorgesehen sind, zu einem Laminatbildungsbereich geführt werden, von welchem das aus den Materialströmen entstandene Laminat durch einen Ringkanal in den Speicherraum geführt wird, der durch eine Ringkolben-Einheit entleerbar ist.

Aufgund der absatzweisen Bildung des Vorformlings in Abhängigkeit von den Hubbewegungen des den Speicherraum entleerenden Ringkolbens können während eines Arbeitszyklus'innerhalb des Extrusionskopfes zwei Betriebsphasen unterschieden werden. Nach Abschluß der Herstellung eines Vorformlings durch Ausstoßen einer entsprechenden Menge an Laminat durch die Austrittsöffnung des Extrusionskopfes ist der Speicherraum entleert. Dabei nimmt der Ringkolben seine Endposition am Ende des Entleerungsvorganges ein. In der folgenden Betriebsphase, der Füllphase, wird der Speicherraum mit Laminat gefüllt, dessen Schichten von den zugeordneten Plastifiziereinrichtungen, also den bereits erwähnten Extrudern, in den Extrusionskopf gefördert werden. Dabei wird der Ringkolben, der für die Entleerung des Speicherraumes benutzt wird, in seine zweite Endposition verschoben, die dem Ende des Füllvorganges entspricht. Während dieser Betriebsphase wird kein Vorformling aus dem Extrusionskopf ausgestoßen, so daß das laminatförmige Material, welches sich im Kanalsystem zwischen Speicherraum und der Austrittsöffnung befindet, nicht bewegt wird. Nachdem das Füllen des Speicherraumes beendet ist, folgt die andere Betriebsphase, die Ausstoß- oder Entleerungsphase, in welcher das zuvor gebildete Laminat zur Herstellung eines Vorformlings aus dem Speicherraum unter Einwirkung des Ringkolbens ausgestoßen und in Richtung auf die Austrittsöffnung verdrängt wird. Dabei fließt das Laminat durch einen Verbindungskanal in Richtung auf die Austrittsöffnung. Während dieser zweiten Betriebsphase wird der Ausstoßvorgang, durch welchen der Vorformling gebildet wird, überwiegend durch die Verdrängung des Materials aus dem Speicherraum durch den Ringkolben bewirkt. Allerdings kommt ein kleinerer Materialanteil hinzu, der bei kontinuierlich laufenden Plastifiziereinrichtungen von diesen während des Ausstoßhubes in den Extrusionskopf gefördert wird mit der Folge, daß dadurch ein gewisser Materialanteil zusätzlich zu der durch den Ringkolben bewirkten Verdrängung des Materials in Richtung auf die Austrittsöffnung verdrängt wird. Der ununterbrochene Betrieb der die Materialien für die Schichten des Laminats plastifizierenden Extruder ist erwünscht, damit sich deren Betriebszustände stabilisieren können.

Die absatzweise, also diskontinuierliche Herstellung der Vorformlinge hat entsprechend den unterschiedlichen Betriebsphasen unterschiedliche Betriebsbedingungen, insbesondere bezüglich der im Extrusionskopf herrschenden Druckverhältnisse, zur Folge. Während der Phase, in der der Speicherraum entleert wird, muß das Laminat durch die im allgemeinen enge Austrittsöffnung bewegt und daher ein hoher Strömungswiderstand überwunden werden. Demzufolge beaufschlagt der Ringkolben in dieser Phase die Kunststoffmasse mit erhöhtem Druck, um das Laminat in einer vorbestimmten Zeit ausstoßen zu können.

Während der anderen Betriebsphase, in der der Speicherraum gefüllt wird, ist der Druck in der Kunststoffmasse üblicherweise gering. Da die Austrittsöffnung im allgemeinen nicht verschließbar ist, kann nur so erreicht werden, daß kein Laminat aus der Austrittsöffnung herausfließt, da der Druck zu gering ist, den Strömungswiderstand zu überwinden.

Diese unterschiedlichen und demzufolge phasenweise sich ändernden Druckverhältnisse führen bei bekannten Verfahren dazu, daß während der Übergänge vom Füllen zum Entleeren und vom Entleeren zum Füllen auch im Laminatbildungsbereich in den einzelnen Materialströmen, aus denen sich das Laminat zusammensetzt, unterschiedliche Drücke herrschen, die Unregelmäßigkeiten bei der Laminatbildung bewirken können. Diese Unregelmäßigkeiten treten daher insbesondere in dem Abschnitt des Laminats auf, der während der Zeit eines Überganges zwischen beiden Betriebsphasen, der auf die Endphase des Entleerungsvorganges und die Anfangsphase des Füllvorganges oder auf die Endphase des Füllvorganges und die Anfangsphase des Entleerungsvorganges ausgedehnt sein kann, in dem Laminatbildungsbereich gebildet wird. Dies ist z. B. darauf zurückzuführen, daß thermoplastische Kunststoffe in plastischem Zustand sich nicht wie eine Flüssigkeit verhalten, sondern innerhalb bestimmter Grenzen eine elastische Komprimierbarkeit aufweisen, die bei Druckentlastung zu einer Rückstellung, also zu einer Volumenvergrößerung und bei Druckerhöhung zu einer Kompression, also zu einer Volumenverkleinerung des Kunststoffes führt, so daß damit gerechnet werden muß, daß während der Übergänge der Betriebsphasen in dem Bereich, in welchem das Laminat sich bildet, durch unterschiedliches Komprimieren und Dekomprimieren der einzelnen Materialströme für das Laminat diese Verformungen erfahren, die zu einer unregelmäßigen Struktur, insbesondere bezüglich der räumlichen und quantitativen Verteilung der einzelnen Schichten im Laminat führen. Jedenfalls kann eine Druckentlastung ein Dekomprimieren und eine Druckerhöhung ein Komprimieren des Materials zur Folge haben, die aufgrund der unterschiedlichen Volumen der einzelnen Schichten und der im allgemeinen unterschiedlichen Volumen der einzelnen Kanalsysteme, durch die die noch getrennten Materialströme zum Laminatbildungsbereich fließen, und unterschiedlicher Eigenschaften der die einzelnen Materialströme bildenden Materialien in den einzelnen Materialströmen unterschiedlich sein werden, so daß im Bereich der Laminatbildungsstelle in den einzelnen Materialströmen Unregelmäßigkeiten der Verteilung der einzelnen Schichten im Laminat auftreten können. Diese Unregelmäßigkeiten sind bei kontinuierlicher Extrusion der Vorformlinge zumindest nicht in diesem Ausmaß vorhanden, da keine durch absatzweise Bildung der Vorformlinge bewirkten Änderungen der Druckverhältnisse auftreten.

Die vorbeschriebenen Unregelmäßigkeiten können zu erheblichen Qualitätsminderungen der aus den Vorformlingen herzustellenden Hohlkörper dadurch führen, daß deren Wandungen von ungleichmäßiger Beschaffenheit sind, wobei Art und Ausmaß der Ungleichmäßigkeit weder kontrollierbar noch vorhersehbar sind. Dabei ist es gleichgültig, wie im einzelnen die Materialströme vor der Laminatbildung im Extrusionskopf geführt werden, da die die Unregelmäßigkeiten bewirkenden Änderungen der Druckverhältnisse in jedem Fall durch den Wechsel zwischen Füllen und Entleeren auftreten, der für das absatzweise Herstellen der Vorformlinge typisch ist.

In vielen Fällen ist es bei der Herstellung von Hohlkörpern mittels Extrusionsblasformen zweckmäßig, ggf. sogar erforderlich, die Wanddicke des Vorformlings während des Ausstoßvorganges z. B. dahingehend zu beeinflussen, daß die Bereiche des Vorformlings, die bei dem späteren Aufweiten desselben unter innerem Überdruck eine große Streckung erfahren, eine größere Wandstärke erhalten als jene Stellen, die nur wenig aufgeweitet werden. Dadurch können Hohlkörper nach individuellen Ansprüchen, insbesondere mit im wesentlichen gleichbleibender Wandstärke hergestellt werden. Dies wird dadurch erreicht, daß der Querschnitt der im allgemeinen ringförmigen Austrittsöffnung in bekannter Weise z. B. mittels eines bewegbaren Innenteils erweitert oder verengt wird. Diese Erweiterungen und Verengungen der Austrittsöffnung bewirken jedoch auch eine Veränderung des Strömungswiderstandes und haben demnach Druckschwankungen zur Folge, die ggf. auch die Laminatbildung störend beeinflussen können, so daß eine Qualitätsminderung des Hohlkörpers eintritt.

Weiterhin können Änderungen bestimmter Eigenschaften des plastifizierten Materials, das häufig aus einem Gemisch von verschiedenen Kunststoffen und/oder Chargen gebildet wird, sowie Temperaturänderungen auftreten, die z. B. Viskositätsschwankungen zur Folge haben, die die Fließeigenschaften des Kunststoffes beeinflussen und somit Druckschwankungen insbesondere während der Entleerungsphase bewirken. Diese Schwankungen sind im allgemeinen unvermeidbar und unvorhersehbar.

Der Erfindung liegt unter anderem die Aufgabe zugrunde, Verfahren und Vorrichtung der einleitend beschriebenen Art so auszugestalten, daß trotz der durch die diskontinuierliche Herstellung der Vorformlinge bewirkten Aufeinanderfolge unterschiedlicher Betriebszustände innerhalb des Extrusionssystems Vorformlinge und daraus zu fertigende Enderzeugnisse hergestellt werden können, die allen in der Praxis vorkommenden Qualitätsanforderungen genügen. Dies soll auch dann gelten, wenn aufgrund von Änderungen des Betriebszustandes, die durch andere Einflüsse verursacht werden, z. B. durch Anwendung eines Programms für die Wanddicke des Vorformlings während der Entleerungsphase, also während des Ausstoßens des Vorformlings, die Strömungsverhältnisse im Bereich der Austrittsöffnung des Speicherraumes durch Änderung der Querschnittsabmessungen derselben Änderungen unterliegen. Der angestrebte Erfolg soll mit einfachen Mitteln auch dann erreichbar sein, wenn die Hohlkörper, wie es im Extrusionsblasverfahren im allgemeinen üblich ist, in großen Stückzahlen hergestellt werden.

Zur Lösung dieser Aufgabe schlägt die Erfindung vor, daß die Übergänge vom Füllen zum Entleeren sowie vom Entleeren zum Füllen des wenigstens einen Speicherraum durch Öffnen bzw. Schließen der Verbindung zwischen dem wenigstens einen Speicherraum und der Austrittsöffnung bewirkt werden und die durch die Antriebsmittel bewirkte Beaufschlagung des wenigstens einen Mittels zum Entleeren des wenigstens einen Speicherraums geregelt wird derart, daß während der Übergänge vom Füllen zum Entleeren sowie vom Entleeren zum Füllen der Druck innerhalb des Extrusionskopfes zumindest in dem wenigstens einen Laminatbildungsbereich keine Änderungen erfährt, durch welche das Laminat funktionsbeeinträchtigend gestört wird.

Im allgemeinen wird so vorgegangen, daß das normalerweise als Ringkolben ausgebildete Mittel zum Entleeren des Speicherraumes während der Entleerungsphase durch eine hydraulische Zylinder-Kolben-Einheit angetrieben wird, wobei die Beaufschlagung des Ringkolbens durch diese hydraulische Antriebseinheit zwangsläufig so gewählt sein muß, daß die Strömungswiderstände beim Entleeren des Speicherraumes und dem dadurch bewirkten Ausstoßen des Vorformlings überwunden werden. Dies hat einen entsprechenden Druckaufbau innerhalb des Extrusionskopfes zur Folge. Bei bekannten Verfahren wird nach Beendigung der Entleerungsphase die Antriebseinheit für den Ringkolben vom hydraulischen Arbeitsmedium, z. B. Hydrauliköl, entlastet, so daß der Ringkolben während der Füllphase unter der Einwirkung des in den Speicherraum strömenden thermoplastischen Kunststoffes unter gleichzeitiger entsprechender Bewegung des Kolbens der hydraulischen Antriebseinheit verdrängt wird, ohne daß die hydraulische Antriebseinheit durch das hydraulische Arbeitsmedium beaufschlagt wäre. Diese Betriebsweise hat das bereits beschriebene Auftreten von Druckunterschieden zur Folge. Zwar ist dabei nicht nur die absolute Größe der Druckunterschiede und somit das Ausmaß der jeweiligen Druckänderung entscheidend, sondern auch die Zeit, innerhalb welcher diese Druckänderung stattfindet. Dabei gilt allgemein, daß eine Druckänderung bestimmten Ausmasses desto weniger schädlich ist, je länger die Zeit ist, während welcher sie stattfindet. D.h., daß der Druckgradient ebenfalls eine erhebliche Rolle für die Auswirkung der Druckänderung hat. Jedoch ist es normalerweise nicht oder nur in sehr begrenztem Umfang möglich, über die Wahl eines bestimmten Druckgradienten die Auswirkungen einer Druckänderung zu mildern oder zu neutralisieren, da dies immer bedeuten würde, für die Durchführung oder den Ablauf einer Druckänderung bestimmten Ausmasses eine längere Zeit vorzusehen mit der Folge, daß, abgesehen von anderen Problemen, der Arbeitszyklus eine unerwünschte Verlängerung erfährt, die zwangsläufig zu einer Verringerung der Produktivität führt, da bei normalen Arbeitsbedingungen, wie sie bei der Massenfertigung im Extrusionsblasverfahren erforderlich sind, im allgemeinen nicht genug Zeit zur Verfügung steht, um bei Druckänderungen einen Gradienten wählen zu können, der das Entstehen von Störungen im Laminat vermeidet.

Die Erfindung vermeidet diese Schwierigkeiten auf einfache Weise dadurch, daß sie die Druckunterschiede zwischen Entleerungsphase einerseits und Füllphase andererseits derart verringert, daß sie für die Qualität des Vorformlings unschädlich sind. Da die während der Entleerungsphase gegebenen Betriebsbedingungen im allgemeinen den in dieser Phase erforderlichen Druck vorschreiben, bedeutet dies, daß der Druck in der Füllphase innerhalb des Extrusionskopfes an den der Entleerungsphase angepaßt wird. Dies kann in einfacher Weise dadurch geschehen, daß die Antriebseinheit für den den Speicherraum entleerenden Ringkolben auch während der Füllphase durch das hydraulische Arbeitsmedium in entsprechender Weise beaufschlagt wird, so daß das Füllen des Speicherraumes und das dadurch bewirkte Verdrängen des Ringkolbens in die Ausgangslage für die jeweils nächstfolgende Entleerungsphase gegen den entsprechend eingestellten Druck des hydraulischen Arbeitsmediums geschieht, durch welchen der Ringkolben während der Entleerungsphase angetrieben wird. D. h., daß der während der Entleerungsphase erforderliche Druck auch während der Füllphase jedenfalls soweit aufrechterhalten wird, daß das Laminat keine funktionsbeeinträchtigenden Störungen erfährt, wobei es im allgemeinen vorzuziehen sein wird, das Verfahren so zu führen, daß der Druck auch während der Übergänge vom Entleeren zum Füllen und vom Füllen zum Entleeren im wesentlichen konstant gehalten wird.

Darüber hinaus wird es normalerweise zweckmäßig sein, so zu verfahren, daß der Druck auch während der Betriebsphase, in welcher der wenigstens eine Speicherraum gefüllt wird, in dem wenigstens einen Laminatbildungsbereich keine Änderungen erfährt, durch welche das Laminat in funktionsbeeinträchtigender Weise gestört wird. Auch hierbei wird es normalerweise vorzuziehen sein, den Druck im wesentlichen konstant zu halten, wenngleich dies nicht in allen Fällen erforderlich oder möglich sein wird, da in der Füllphase unter Umständen eine gewisse Zeitreserve vorhanden ist, die es erlaubt, eine Druckänderung stattfinden zu lassen, deren Gradient so gewählt ist, daß schädliche Auswirkungen auf das Laminat vermieden werden.

Gemäß einem weiteren Vorschlag der Erfindung sollte so verfahren werden, daß der Druck auch während der Betriebsphase, in welcher der wenigstens eine Speicherraum entleert wird, zumindest in dem wenigstens einen Laminatbildungsbereich keine Änderungen erfährt, durch welche das Laminat funktionsbeeinträchtigend gestört wird, wobei auch hier gilt, daß es nach Möglichkeit vorzuziehen ist, den Druck im wesentlichen konstant zu halten.

Weiterhin kann in allen Fällen so verfahren werden, daß zumindest während eines Teilabschnittes des Arbeitszyklus', ggf. aber auch während des gesamten Arbeitszyklus', zur Erzeugung des erforderlichen Druckes in der Kunststoffmasse die durch die Antriebsmittel bewirkte Beaufschlagung des wenigstens einen Mittels zum Entleeren des wenigstens einen Speicherraumes in Abhängigkeit vom Druck innerhalb des Extrusionskopfes geregelt wird. Eine solche Verfahrensweise würde auch die Einflüsse berücksichtigen, die darauf zurückzuführen sind, daß in vielen Fällen die Querschnittsabmessungen der Austrittsöffnung während der Entleerungsphase zur Beeinflussung der Dicke des Vorformlings nach einem bestimmten Programm geändert werden. Dies hat entsprechende Änderungen der Strömungsverhältnisse im Bereich der Austrittsöffnung zur Folge derart, daß mit abnehmender Größe der Austrittsöffnung der Strömungswiderstand zunimmt und mit zunehmender Größe der Austrittsöffnung der Strömungswiderstand abnimmt.

Bei gleichbleibender Geschwindigkeit des das Entleeren des Speicherraumes bewirkenden Ringkolbens hätte dies den Änderungen der Größe der im allgemeinen ringförmigen Austrittsöffnung entsprechende Änderungen des Druckes innerhalb des Extrusionskopfes zur Folge derart, daß bei sich verringernder Spaltbreite der Austrittsöffnung der Druck ansteigt und umgekehrt. Die Auswirkungen dieser Druckänderungen auf das Laminat hängen auch in diesem Fall nicht nur ab vom Ausmaß der Änderung der Spaltbreite der Austrittsöffnung und damit der dadurch bewirkten Änderung des Druckes, sondern auch von der Zeit, während welcher diese Änderung erfolgt. Da diese beiden Größen durch das Programm, nach welchem die Wanddickenbeeinflussung durchgeführt wird, festgelegt sind, ist eine Anpassung dieser Parameter im Sinne einer Verringerung der Auswirkungen der Druckänderungen auf die Qualität des Laminates nicht oder nur in ganz beschränktem Umfang möglich.

Eine andere Möglichkeit der Verhinderung einer qualitätsmindernden Beeinflussung des Laminats durch die durch das Wanddickenprogramm bewirkten Änderungen der Strömungsverhältnisse innerhalb des Extrusionskopfes besteht darin, die durch die Antriebsmittel bewirkte Beaufschlagung des wenigstens einen Mittels zum Entleeren des Speicherraumes zur Beeinflussung von dessen Geschwindigket in Abhängigkeit von diesem Programm während der Betriebsphase, in welcher der Speicherraum entleert wird, so anzupassen, daß der resultierende Druck in dem wenigstens einen Laminatbildungsbereich keine Änderungen erfährt, durch welche das Laminat funktionsbeeinträchtigend gestört wird, wobei auch hier gilt, daß anzustreben ist, den Druck im wesentlichen konstant zu halten.

Bei der zuerst beschriebenen Verfahrensweise, bei welcher die durch die Antriebsmittel bewirkte Beaufschlagung des Mittels zum Entleeren des Speicherraumes, z. B eines Ringkolbens, in Abhängigkeit vom Druck im Bereich der Laminatbildungsstelle innerhalb des Extrusionskopfes geregelt wird, bewirken Veränderungen des Spaltes der Austrittsöffnung zwangsläufig Veränderungen der Geschwindigkeit, mit welcher der Ringkolben sich bewegt. Die Geschwindigkeit ist u. a. abhängig von den Fließwiderständen der Austrittsöffnung und den Materialeigenschaften, z. B. der Viskosität. Wird der Spalt der Austrittsöffnung vergrößert, verringern sich die Fließwiderstände und unter Beibehaltung des Druckes, der auf den Kunststoff wirkt, wird sich die Geschwindigkeit des Ringkolbens erhöhen. Ebenfalls führt eine Viskositäts-Erniedrigung, wie sie z. B. bei höheren Verarbeitungstemperaturen auftreten kann, zu einer Geschwindigkeitserhöhung. Eine Verringerung des Austrittsspaltes bei gleichbleibendem Druck und/oder eine Viskositäts-Erhöhung bewirken eine Verringerung der Ringkolbengeschwindigkeit.

Im Gegensatz hierzu wird bei der zweiten Verfahrensweise die Geschwindigkeit des Ringkolbens in Abhängigkeit von der Größe des Austrittsspaltes derart gesteuert, daß entsprechend dem jeweils wirksamen Austrittsspalt die Geschwindigkeit so eingestellt wird, daß sich unter Berücksichtigung der gegebenen Fließwiderstände ein einheitliches Druckniveau an der Laminatbildungsstelle ergibt. Über eine Rechneneinheit können entsprechend der gewünschten Wanddicken und der diesen entsprechenden Austrittsspalte, die jeweiligen Geschwindigkeiten bestimmt und einem Programmgeber zugeführt werden der parallel zum Wanddickenprogramm abläuft und die Geschwindigkeit des Ringkolbens vorgibt.

Diese Verfahrensweise wird zwar nicht zu einer nahezu vollständigen Vergleichmäßigung des Druckes führen, die erreichbar ist, wenn sich die Geschwindigkeit des Ringkolbens während der Entleerungsphase unmittelbar in Abhängigkeit vom im Kopf vorhandenem Druck ergibt. Jedoch kommt es, wie bereits erwähnt, bei der Realisierung der Erfindung nicht so sehr auf eine absolute Konstanthaltung des Druckes an als vielmehr darauf, Druckschwankungen pro Zeiteinheit zu vermeiden, die zu einer unzulässigen Qualitätsminderung des Laminats führen.

Zur Erzielung einer hohen Produktivität und einer gleichbleibenden Produktqualität ist es erforderlich, daß die Zykluszeit der Blasformmaschine möglichst konstant ist, also von Blaszyklus zu Blaszyklus gleich ist. Die Bereitstellung von Vorformlingen muß demnach dem Ablauf der Blasformmaschine angepaßt werden. Aufgrund der jeder Kunststoffmasse innewohnenden Ungleichmäßigkeiten in den Eigenschaften können sich diese auch auf den Ausstoßvorgang zur Bildung des Vorformlings auswirken.

Erfolgt die Beaufschlagung des Mittels zum Entleeren während der Ausstoßphase in Abhängigkeit von dem an der Laminatbildungsstelle aufrechtzuerhaltenden Druck, führen z. B. Viskositätsschwankungen zu Veränderungen der Ausstoßgeschwindigkeit, welche unmittelbar die Ausstoßzeit für den Vorformling beeinflußt.

Dies ist in der Regel unerwünscht, so daß nach einem weiteren Vorschlag der Erfindung der auf die Kunststoffmasse wirkende Druck so verändert wird, daß die vorgegebene Ausstoßzeit eingehalten wird. Verkürzt sich z. B. die Ausstoßzeit, da in Folge einer Massetemperaturerhöhung die Viskosität des Kunststoffes sinkt, wird der in der Kunststoffmasse herrschende Druck so gesenkt, daß sich wieder eine Ausstoßgeschwindigkeit einstellt, die zur gewünschten Ausstoßzeit führt. Dabei wird zweckmäßig so vorgegangen, daß zur Erzielung der gewünschten Ausstoßzeit die Änderung der Beaufschlagung des wenigstens einen Mittels zum Entleeren des Speicherraums zur Veränderung des Druckes während der Betriebsphase erfolgt, in welcher der Speicherraum gefüllt wird. Die Druckänderung soll so erfolgen, daß möglichst die gesamte Zeit, innerhalb welcher der Speicherraum gefüllt wird, genutzt wird. Hierdurch entstehen nur geringe Druckgradienten, die in der Regel zu keiner unerwünschten Störung des Laminates führen. Sollte eine größere Druckänderung notwendig werden als bei einem zulässigen Druckgradienten während einer Füllphase erreicht werden kann, so ist es zweckmäßig, die Druckänderung über mehrere Füllphasen zu verteilen.

Ein wesentlicher Vorteil der Erfindung besteht darin, daß ihre Anwendung einen nur geringen zusätzlichen Aufwand maschinentechnischer oder verfahrenstechnischer Art erfordert. Im wesentlichen kommt es nur darauf an, unter Verwendung ohnehin vorhandener Mittel den Betriebsablauf in einer Weise zu regeln oder zur steuern, daß der angestrebte Effekt eintritt.

Dies gilt auch für die Mittel, die erforderlich sind, um die Verbindung zwischen dem wenigstens einen Speicherraum und der Austrittsöffnung in Abhängigkeit vom Verfahrensablauf zu schließen und zu öffnen. Diese Mittel können innerhalb des Extrusionskopfes, ggf. aber auch in der Ebene der Austrittsöffnung angeordnet sein. Entscheidend ist, daß sie so ausgebildet und angeordnet sind, daß durch ihre Betätigung des Laminat nur unwesentlich beeinflußt wird.

Das Schließen der Verbindung zwischen dem wengistens einen Speicherraum und der Austrittsöffnung wird am zweckmäßigsten in Abhängigkeit vom Volumen des ausgestossenen Laminats, gemessen an einem vorgegebenen Weg des wenigstens einen Mittels zum Entleeren des wenigstens einer Speicherraums bewirkt werden. Es ist aber auch möglich, das Schließen dieser Verbindung zeitabhängig oder in Abhängigkeit von der ausgestoßenen Länge des Vorformlings, die z. B. durch eine Lichtschranke festgestellt wird, zu bewirken.

Das Öffnen der Verbindung zwischen dem wenigstens einen Speicherraum und der Austrittsöffnung kann in Abhängigkeit von einem vorgegebenen Weg des wenigstens einen Mittels zum Entleeren des wenigstens einen Speicherraums bewirkt werden, welcher Weg dem gefüllten Zustand des wenigstens einen Speicherraumes entspricht. Andere Möglichkeiten bestehen darin, das Öffnen der Verbindung zeitabhängig oder in Abhängigkeit vom Betriebsablauf der zugeordneten Blasmaschine zu bewirken.

Die Verfahrensführung wird im allgemeinen dann einfacher sein, wenn während der Entleerungsphase nur geringe Druckschwankungen zu erwarten sind. Dies kann z. B. dann der Fall sein, wenn keine Wanddickensteuerung vorgesehen ist oder eine vorhandene Wanddickensteuerung nur geringe Änderungen der Wanddicke und damit der Querschnittsdimensionen der Austrittsöffnung bewirkt. In diesem Falle ist es möglich, das Mittel zum Entleeren des wenigstens einen Speicherraumes während der Entleerungsphase mit konstanter Geschwindigkeit zu bewegen und den Druck innerhalb des Extrusionskopfes während der Füllphase durch entsprechende Beaufschlagung des Antriebsmittels für das wenigstens eine Mittel zum Entleeren des wenigstens einen Speicherraumes in einem Bereich zu halten, der zumindest näherungsweise dem Druckbereich entspricht, in welchem die Drücke während der Entleerungsphase liegen.

In der Zeichnung ist ein Ausführungsbeispiel der Erfindung dargestellt. Es zeigen:
- Fig. 1: im Schema einen Extrusions-Blaskopf während des Entleerungshubes des Ausstoßkolbens,
- Fig. 2: eine der Fig. 1 entsprechende Darstellung, jedoch während des Füllhubes des Ausstoßkolbens,
- Fig. 3a: im Schema eine Extrusions-Blasvorrichtung mit einer bevorzugten Regeleinrichtung,
- Fig. 3b: im Schema eine Extrusions-Blasvorrichtung mit einer anderen Regeleinrichtung,
- Fig. 4a: in graphischer Darstellung den Druckverlauf während der unterschiedlichen Betriebsphasen nach dem Stand der Technik,
- Fig. 4b: einen möglichen Druckverlauf bei Anwendung der Lehre nach der Erfindung,
- Fig. 4c: einen anderen möglichen Druckverlauf bei Anwendung der Lehre nach der Erfindung.

In den Figuren sind sich jeweils entsprechende Teile und Elemente mit der gleichen Positionsnummer versehen.

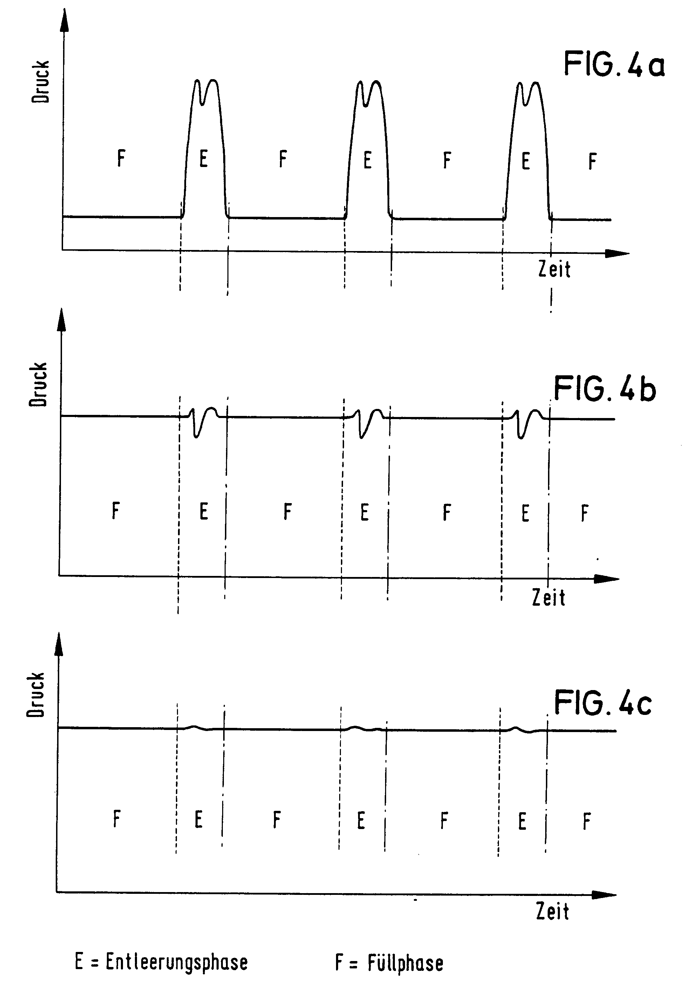

In den Figuren 4a - c ist der jeweilige Druckverlauf innerhalb des Extrusionskopfes bei unterschiedlichen Voraussetzungen über mehrere Arbeitszyklen, die durch strichpunktierte Linien abgegrenzt sind, graphisch dargestellt. Fig. 4a zeigt einen typischen Druckverlauf nach dem Stand der Technik. In der Entleerungsphasen E, die durch gestrichelte Linien angedeutet sind, E sind Schwankungen aufgrund einer Wanddickensteuerung dargestellt. Die gravierendsten Druckänderungen liegen jeweils bei den Übergängen von der Entleerungsphase E zur Füllphase F und von der Phase F zur Phase E.

In Fig. 4b ist ein Druckverlauf dargestellt, der bei Anwendung der Verfahrensweise gemäß der Erfindung erreicht werden kann. Da der Druck nunmehr auch während der Füllphase und insbesondere während der Übergänge der Betriebsphasen auf einem Druckniveau gehalten wird, das näherungsweise dem Druck entspricht, der während der Entleerungsphase herrscht, werden große Druckänderungen während der Übergänge, die erhebliche Störungen des Laminats verursachen können, vermieden.

In Fig. 4c ist ein noch günstigerer Druckverlauf dargestellt, der bei Anwendung der Lehre gemäß der Erfindung erreicht werden kann. Hierbei wird auch während der Entleerungsphase die Beaufschlagung des Ringkolbens in Abhängigkeit vom Druck innerhalb des Extrusionskopfes dahingehend geregelt, daß die während der Entleerungsphase auftretenden Druckschwankungen zumindest merklich verringert werden. Bei einer solchen Verfahrensweise kann erreicht werden, daß der Druck über die Arbeitszyklen nahezu konstant bleibt, so daß Druckschwankungen, die zu Laminatstörungen führen können, vermieden werden.

Wird die Beaufschlagung des Ringkolbens in Abhängigkeit von einem vorgegebenen, auf die Größe des Austrittsspaltes abgestimmten Geschwindigkeitsprogramm vorgenommen, so wird sich ein Druckverlauf über die Arbeitszyklen einstellen, dessen Schwankungen in ihrem Ausmaß zwischen denen der in Fig. 4b und Fig. 4c liegen. Dies ist darauf zurückzuführen, daß durch eine solche Verfahrensweise unvorhersehbare Einflüsse, z. B. Viskositätsschwankungen, nicht berücksichtigt werden können.

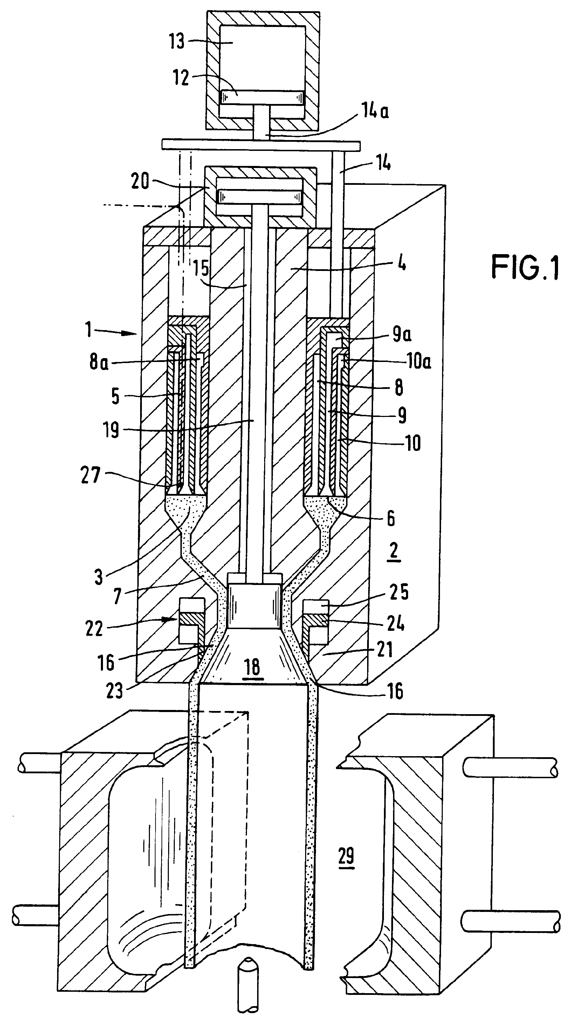

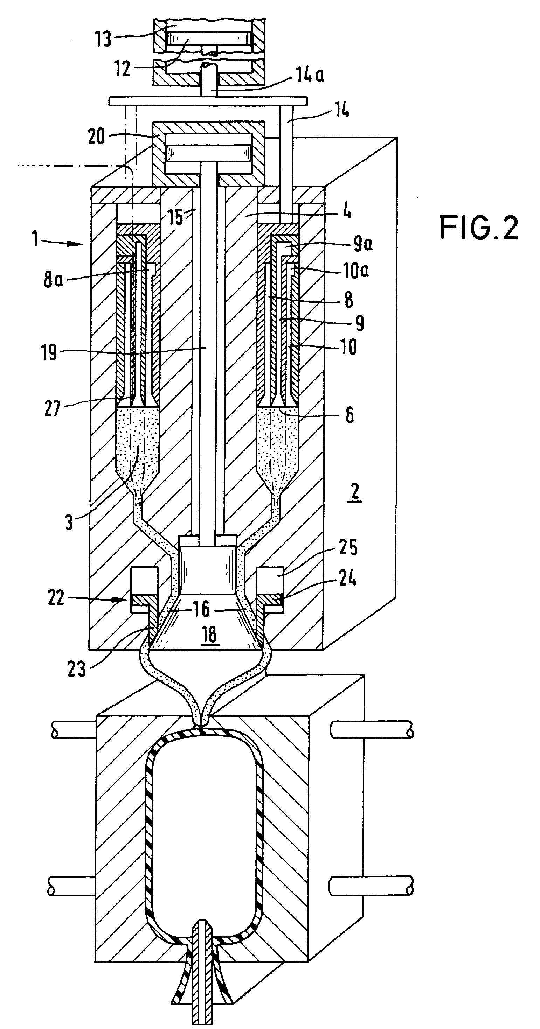

Der Extrusionskopf 1 des Ausführungsbeispiels gemäß den Fig. 1 - 2 weist ein Gehäuse 2 auf, innerhalb dessen in einem Abstand zur äußeren Wandung des Gehäuses 2 koaxial ein Kern 4 angeordnet ist, welcher mit einer axialen Bohrung 15 versehen ist. Die Bohrung 15 dient zur Aufnahme einer darin in Längsrichtung des Extrusionskopfes 1 hin-und herbewegbaren und in geeigneter Weise geführten Stange 19, die an ihrem einen Ende einen Düsenkern 18 trägt, der gemeinsam mit dem ihn umgebenden Bereich 21 des Gehäuses 2 eine Austrittsöffnung 16 begrenzt. Die Stange 19 ist an ihrem der Austrittsöffnung 16 abgekehrten Ende mit dem Kolben einer hydraulischen Zylinder-Kolben-Einheit 20 verbunden. Durch entsprechende Beaufschlagung des Kolbens kann der Düsenkern 18 axial nach oben oder unten zur Beeinflussung der Breite der ringförmigen Extrusionsöffnung 16 verschoben werden. Dies wird in der üblichen Weise dadurch ermöglicht, daß die einander gegenüberliegenden Flächen des Düsenkerns 18 und der ihn umgebenden Bereiche 21 des Gehäuses 2, die als besonderer Düsenring ausgebildet sein können, konisch verlaufen.

Innerhalb des Extrusionskopfes 1 ist ein zum Kern 4 koaxialer, im Querschnitt ringförmiger Speicherraum 3 vorgesehen, dem ein axial hin- und herverschiebbarer Ringkolben 5 zugeordnet ist. Der Ringkolben 5 ist an seinem der Austrittsöffnung 16 abgekehrten Ende über Kolbenstangen 14, 14a mit dem Kolben 12 verbunden, der in einem hydraulischen Zylinder 13 geführt ist. Es können auch mehrere Kolben-Zylinder-Anordnungen 12, 13 vorgesehen sein.

Der Extrusionskopf ist mit drei in der Zeichnung nicht dargestellten Extrudern verbunden, aus denen jeweils ein thermoplastisches Kunststoffmaterial oder ein anderes Material mit gleichen Eigenschaften bezüglich der Verarbeitbarkeit in den Extrusionskopf 1 gefördert wird. Diese Extruder sind in geeigneter Weise mit innerhalb des Ringkolbens 5 angeordneten Kanalsystemen verbunden. Wie im einzelnen die Verbindung zwischen den Extrudern und dem Extrusionskopf erfolgt, ist nicht Gegenstand der Erfindung. So ist beispielsweise eine Verbindung zwischen den Austrittsöffnungen der Extruder und den innerhalb des Ringkolbens 5 angeordneten Kanalsystemen in der DE-OS 36 35 334 beschriebenen Weise möglich. Andere Möglichkeiten der Verbindung sind z. B. in der DE-AS 21 61 356,in der DE-PS 26 25 786, in der DE-PS 26 39 665 und in der DE-PS 30 26 822 offenbart.

Jeder der von den Extrudern kommenden Materialströme gelangt innerhalb des Kolbens 5 jeweils in einen ringförmigen Verteilerkanal 8a, 9a, 10a, von denen jeder in einer zur Längsachse des Extrusionskopfes 1 senkrechten Ebene verläuft. Diese Verteilerkanäle 8a, 9a, 10a können aus Platzgründen innerhalb des Ringkolbens 5 in Richtung der Längsachse desselben etwas gegeneinander versetzt angeordnet sein. In den Verteilerkanälen 8a, 9a, 10a wird der vom jeweiligen Extruder in Form eines geschlossenen Stranges zugeführte Materialstrom zu einem im Querschnitt ringförmigen Materialstrom umgeformt.

An jeden der Verteilerkanäle 8a, 9a, 10a schließt sich jeweils ein Ringkanal 8, 9, 10 an. Diese Ringkanäle 8, 9 10 münden am stirnseitigen Ende 6 des Ringkolbens 5 in den Speicherraum 3 bzw. bei in der unteren Endlage befindlichem Ringkolben 5 in den an den Speicherraum anschliessenden Verbindungskanal 7, der den Speicherraum 3 mit der ringförmigen Austrittsöffnung 16 verbindet.

Die durch die Extruder plastifizierten Materialien werden durch die Ringkanäle 8, 9, 10 in den Speicherraum 3 geführt, wo sie sich zum Laminat vereinigen. Der Laminatbildungsbereich befindet sich somit in unmittelbarem Anschluß an der der Austrittsöffnung 16 zugekehrten freien Begrenzungsfläche 6 des Ringkolbens 5. Da der Ringkolben 5 während des Arbeitszyklus' hin- und hergehende Bewegungen ausführt, hängt die Position des Laminatbildungsbereiches von der jeweiligen Position des Ringkolbens 5 ab.

Weiterhin ist in dem den Verbindungskanal 7 enthaltenden Abschnitt des Extrusionskopfes ein ringförmiger Raum 25 angeordnet, der mit dem darin hin- und herbewegbaren ringförmigen Kolben 24 eine hydraulische Kolben-Zylindereinheit bildet. Der Kolben 24 ist mit einem ebenfalls ringförmigen Verschlußelement 23 verbunden, das in einem koaxial zum Düsenkern 18 verlaufenden ringförmigen Spalt 26 geführt wird. Die Anordnung ist dabei so getroffen, daß der Spalt 26 in denjenigen Bereich des Verbindungskanals 7 mündet, der durch den konisch verlaufenden Abschnitt des Düsenkerns 18 und den ihn umgebenden Bereich 21 des Gehäuses 2 begrenzt wird. Durch die Bewegung des Kolbens 24 in Richtung auf die Austrittsöffnung 16 wird das Verschlußelement 23 in den Verbindungskanal 7 verschoben, bis es mit seiner, der Austrittsöffnung 16 zugekehrten Kante an dem Düsenkern 18 anliegt und somit den Verbindungskanal 7 verschließt. Durch eine Bewegung des Kolbens 24 in die andere Richtung wird der Verbindungskanal 7 wieder geöffnet. Vorzugsweise ist die der Austrittsöffnung 16 zugewandten Kante des Verschlußelementes 23 derart ausgebildet sein, daß diese Kante in der Position des Verschlußelementes 23, in welcher der Verbindungskanal 7 frei ist, bündig mit dem den Düsenkern 18 umgebenden Bereich 21 des Gehäuses 2 abschließt.

Wird das Verschlußelement 23 zum Verschließen auf den Düsenkern 18 bewegt, ist es unvermeidbar, daß das in dem Verbindungskanal 7 vorhandene Material abgequetscht und gestört wird. Zweckmäßig ist daher die Ausgestaltung des Verschlußelementes 23 derart gewählt, daß nur ein geringes Volumen des Materials innerhalb des Verbindungskanals 7 gestört wird, d. h., daß der in den Verbindungskanal eingeschobene Bereich des Verschlußelements 23 ein möglichst geringes bauliches Volumen aufweist. Ein Verschließen des Verbindungskanals 7 durch den Düsenkern 18 hätte eine wesentlich größere Störung des Laminats zur Folge, da dieser Bereich 21 zwischen Düsenkern 18 und Gehäuse 2 konisch ausgebildet ist, so daß ein wirksamer Verschluß erst dann erreicht ist, wenn die gegenüberliegenden Flächen nahezu vollständig aneinanderliegen. Besonders zweckmäßig kann es sein, die Mündung des ringförmigen Spaltes 26 in unmittelbare Nähe der Austrittsöffnung 16 anzuordnen, wodurch bewirkt wird, daß der durch das Verschließen gestörte Bereich des Laminats in einen Volumen-Endabschnitt des Vorformlings gelangt, der ohnehin Überschußmaterial und damit Abfall ist. In jedem Fall muß gewährleistet sein, daß das Verschlußelement 23 in seiner Schließlage ein Austreten von Laminat aus der Austrittsöffnung 16 verhindert.

Während der Füllphase des Speicherraums 3 liegt das Verschlußelement 23 am Düsenkern 18 an und verschließt somit den Verbindungskanal 7. Das von den Extrudern plastifizierte Material fließt durch die Ringkanäle 8, 9, 10 bei gleichzeitiger Bildung des Laminats in den Speicherraum 3. Der Ringkolben 5 wird daher durch das einfließende Material nach oben, d. h. in Richtung auf seine der Austrittsöffnung abgekehrte Endlage verschoben. Da der Verbindungskanal 7 verschlossen ist, ist es möglich, die Antriebsmittel 12, 13 des Ringkolbens 5 während der Füllphase derart mit Druck zu beaufschlagen, wie es zur Erzielung des angestrebten Zweckes erforderlich ist.

Wenn der Ringkolben 5 seine obere Endposition erreicht hat und folglich der Speicherraum 3 mit Laminat gefüllt ist, wird der Verbindungskanal 7 durch Verschieben des Verschlußelementes 23 freigegeben, worauf das Laminat aufgrund der Beaufschlagung des Antriebsmittels 12, 13 für den Ringkolben 5 unter Bildung des Vorformlings durch den Ringkolben aus der Austrittsöffnung 16 in den Bereich der für die Aufnahme des Vorformlings geöffneten Blasform 29 bewegt wird. Zur Beendigung der Ausstoßphase wird das Verschlußelement 23 durch entsprechende Beaufschlagung des Kolbens 24 gegen den Düsenkern 18 bewegt, wodurch der Verbindungskanal 7 verschlossen wird. Der in seiner unteren Endposition befindliche Ringkolben 5 wird wiederum durch die in den Speicherraum 3 einfliessenden Materialströme nach oben bewegt. Gleichzeitig wird die Blasform 29 geschlossen, in welcher der Vorformling in an sich bekannter Weise durch inneren Überdruck aufgeweitet wird.

Weiterhin weist der Extrusionskopf wenigstens ein Druckmeßmittel 27 auf, das vorzugsweise in unmittelbarer Umgebung des Laminatbildungsbereiches angeordnet ist. Bei dem in Fig. 1 dargestellten Extrusionskopf ist das Druckmeßmittel an der Stirnfläche 6 des beweglichen Ringkolbens 5 angeordnet, da bei dieser Ausführungsform die Lage des Laminatbildungsbereiches von der Position des Kolbens 5 abhängt. Ist der Laminatbildungsbereich innerhalb des Extrusionskopfes stationär, ist es zweckmäßig, das Druckmeßmittel im Gehäuse 2 des Extrusionskopfes in der Nähe des Laminatbildungsbereiches anzuordnen.

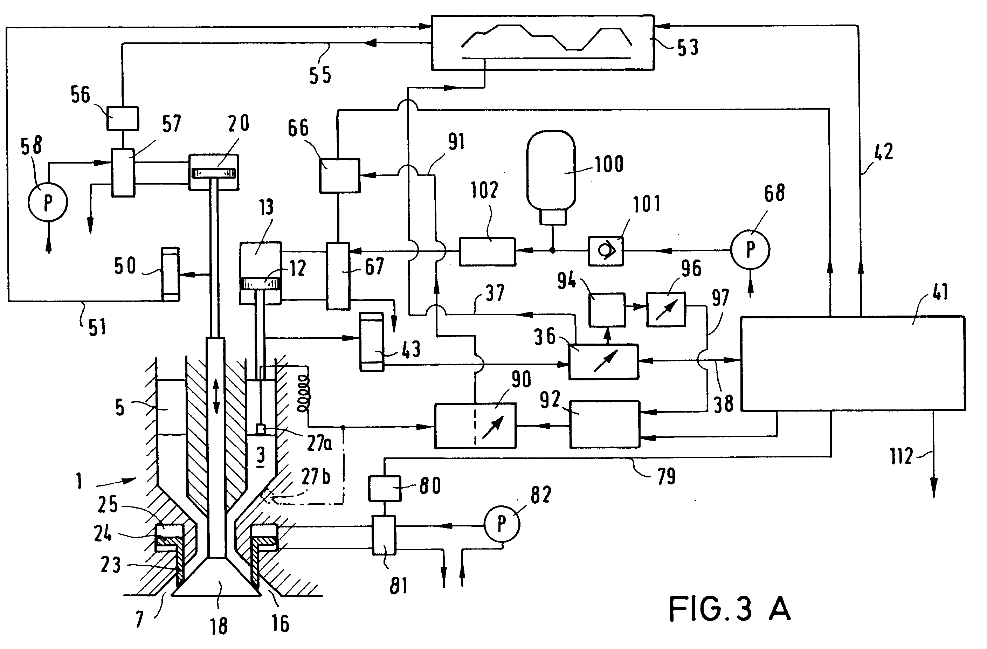

Die Fig. 3a zeigt im Schema ein erstes Beispiel einer Regel- und Steuereinrichtung, wie sie für die Durchführung des Verfahrens vorgesehen sein kann. Bei dieser Ausführungsform wird der Druck konstant gehalten dadurch, daß die Beaufschlagung des Ausstoßkolbens 5 während des gesamten Arbeitszyklus', also Entleerungs- und Füllphase, in Abhängigkeit vom gemessenen Druck erfolgt. Zu diesem Zweck weist der Extrusionskopf ein Druckmeßmittel 27a oder 27b auf, das derart angeordnet ist, daß es sich in unmittelbarer Nähe des Laminatbildungsbereiches befindet. Ist der Laminatbildungsbereich im Extrusionskopf stationär, so kann eine Position des Druckmeßmittels 27b geeignet sein. Ist jedoch der Laminatbildungsbereich abhängig von z. B. der Position des Ringkolbens 5, so kann eine Anordnung des Druckmeßmittels 27a an dem Ringkolben 5 zweckmäßig sein. In jedem Fall muß sichergestellt sein, daß der Druck so gemessen werden kann, daß das Meßergebnis dem Druck im Laminatbildungsbereich entspricht oder die Möglichkeit bietet, den Druck im Laminatbildungsbereich aus dem Meßergebnis abzuleiten. Es kann daher auch zweckmäßig sein, mehrere Druckmeßmittel im Extrusionskopf vorzusehen. Das Druckmeßmittel ist mit einem Druckregler 90 verbunden, der in Abhängigkeit von einem beeinflußbaren Sollwert eine Stellgröße erzeugt, die über die Signalleitung 91 an eine Steuereinrichtung 66 weitergegeben wird, die in Abhängigkeit von dieser Stellgröße das Ventil 67 für das hydraulische Arbeitsmedium für die Kolben-Zylindereinheit 12, 13 derart verstellt, daß sich der gewünschte Druck im Extrusionskopf einstellt. Der für die Beaufschlagung des Ringkolbens 5 benötigte Druck im hydraulischen Arbeitsmedium wird durch die Pumpe 68 erzeugt, die über ein Rückschlagventil 101 einen ausreichend dimensionierten Druckspeicher 100 befüllt. Über ein Druckminderventil 102 steht dieser Druckspeicher 100 in Verbindung mit dem Stellventil 67, so daß während des gesamten Arbeitszyklus' das hydraulische Arbeitsmedium auf einem ausreichend hohen und insbesondere konstanten Druckniveau gehalten wird.

Die durch die vorstehend beschriebene Anordnung bewirkte Beaufschlagung des Kolbens 12 und somit des Ringkolbens 5 hat zur Folge, daß während des gesamten Arbeitszyklus der Druck im Laminatbildungsbereich im wesentlichen konstant bleibt. Die Bewegungsrichtung und die Position des Ringkolbens 5 werden über einen Wegaufnehmer 43 erfaßt, der in Verbindung mit einer Vorgabeeinrichtung 36 steht, mit welcher der Kolbenweg eingestellt werden kann, der benötigt wird, um aus dem gefüllten Speicherraum 3 die für einen Vorformling benötigte Volumenmenge des Laminats auszustoßen. Die Vorgabe eines Kolbenwegs ist daher erforderlich, da üblicherweise das Volumen des Speicherraumes 3 größer gewählt wird als das Volumen des auszustoßenden Vorformlings, um eine flexible Anpassung des rechts teuren Extrusionskopfes an unterschiedliche Vorformlinge mit unterschiedlichen Volumen zu ermöglichen.

Wenn der Ringkolben 5 während des Füllvorganges seine obere Position erreicht hat, die einem Laminatvolumen entspricht, das zur Bildung eines Vorformlings erforderlich ist, und wenn die der Extrusionseinheit zugeordnete Blasform 29, die durch eine Steuerleitung 112 mit der zentralen Maschinensteuerung 41 verbunden ist, zur Aufnahme eines Vorformlings bereit ist, wird durch die zentrale Maschinensteuerung 41 der Beginn der Ausstoßphase bewirkt.

Das während der Füllphase den Verbindungskanal 7 verschliessende hydraulisch betätigte Verschlußelement 23 ist über ein Stellventil 81 mit einer Pumpe 82 für das hydraulische Arbeitsmedium verbunden. Zum Beginn der Ausstoßphase bewirkt ein Signal 79 der Maschinensteuerung durch eine Steuereinrichtung 80 eine Stellung des Ventils 81 derart, daß das Verschlußelement 23 sich nach oben bewegt und den Verbindungskanal 7 freigibt, so daß das gespeicherte Laminat infolge des herrschenden Drucks durch den Ringkolben 5 nach unten durch die Austrittsöffnung 16 bewegt werden kann. Über die Signalleitung 38 wird durch die Maschinensteuerung 41 der Vorgabeeinheit 36 ein Signal übermittelt, nach welchem die Position des Ringkolbens 5 festgestellt wird, ab der der eingestellte Kolbenhub zu messen ist. Durch die Vorgabeeinheit wird gleichzeitig eine Zeitmeßeinrichtung 94 aktiviert, die die Dauer des Ausstoßvorganges aufnimmt.

Hat der Ringkolben 5 während des Ausstoßvorganges einen Weg zurückgelegt, der zur Bildung eines Vorformlings erforderlich ist, wird von der Vorgabeeinheit 36 über die Signalleitung 38 an die Maschinensteuerung 41 ein Signal gegeben, aufgrund dessen das Verschlußelement 23 zur Beendigung der Ausstoßphase und damit zur Einleitung der folgenden Füllphase geschlossen wird. Dazu wird durch ein Signal 79über die Steuereinrichtung 80 das Ventil 81 so gestellt, daß das Verschlußelement 23 durch die Einwirkung des hydraulischen Arbeitsmediums den Verbindungskanal verschließt.

Zur Korrektur eventuell schwankender Ausstoßzeiten ist eine Steuereinrichtung vorgesehen, die den Soll-Wert für den im Extrusionskopf aufrechtzuerhaltenen Druck dahingehend beeinflußt, daß bei einer zu lang dauernden Ausstoßzeit der Soll-Druck für die folgende Ausstoßphase während der Füllphase erhöht wird, bei einer zu kurz dauernde Ausstoßzeit hingegen der Soll-Druck vermindert wird. Im einzelnen wird die Korrektur dadurch bewirkt, daß die in der Zeitaufnahme 94 gemessene Ausstoßzeit mit einem einstellbaren Soll-Wert für die Ausstoßzeit in einer Vergleichseinheit 96 verglichen und das Ergebnis in einer nachgeschalteten Rechnereinheit 92 ausgewertet wird. Die Rechnereinheit 92 ermittelt aus der Größe der Abweichung sowie aus der Art der Abweichung einen neuen Soll-Wert für den Druckregler 90. Zweckmäßig ist es dabei, daß der alte Soll-Druck auf den neuen Soll-Druck während der gesamten Füllphase in Form einer stetigen Druckerhöhung oder -erniedrigung angepaßt wird, so daß abrupte Druckschwankungen vermieden werden. Weiterhin kann es zweckmäßig sein, eine Korrektur der Ausstoßzeit erst bei Überschreiten eines zulässigen Toleranzbereiches durchzuführen, um stabile Druckverhältnisse zu schaffen. Die Rechnereinheit 92 steht mit der Maschinensteuerung 41 in Verbindung, da vorgesehen sein kann, derartige Soll-Druck-Anpassungen nur während der Füllphase durchzuführen.

Weiterhin ist eine Wanddickensteuerung 53 vorgesehen, die durch die Maschinensteuerung 41 während der Austoßphase durch ein entsprechendes Signal 42 wirksam ist und die Spaltbreite der Austrittsöffnung 16 in Abhängigkeit von dem zurückgelegten Weg des Ringkolbens vorgibt. Im einzelnen ist die Anordnung so getroffen, daß der Dorn 18 durch die hydraulische Beaufschlagung der Kolben-Zylindereinheit 20 hin- und herbewegt werden kann. Das Stellventil 57, das mit der Pumpe 58 für das hydraulische Arbeitsmedium verbunden ist, wird durch die Steuereinrichtung 56 entsprechend dem Ausgangssignal 55 der Wanddickensteuerung 53 derart eingestellt, daß der Dorn 18 in eine Position gebracht wird, in welcher die Spaltbreite der Austrittsöffnung 16 der jeweiligen Soll-Spaltbreite entspricht. Dabei ist die Wanddickensteuerung 53 über die Leitung 37 mit der Vorgabeeinrichtung 36 verbunden, die den zurückgelegten Weg des Ringkolbens 5 erfaßt. Zur Bestimmung der Position des Dornes 18 ist ein Wegaufnehmer 50 vorgesehen, der über die Signalleitung 51 mit der Wanddickensteuerung 53 in einem geschlossenen Regelkreis zusammenwirkt.

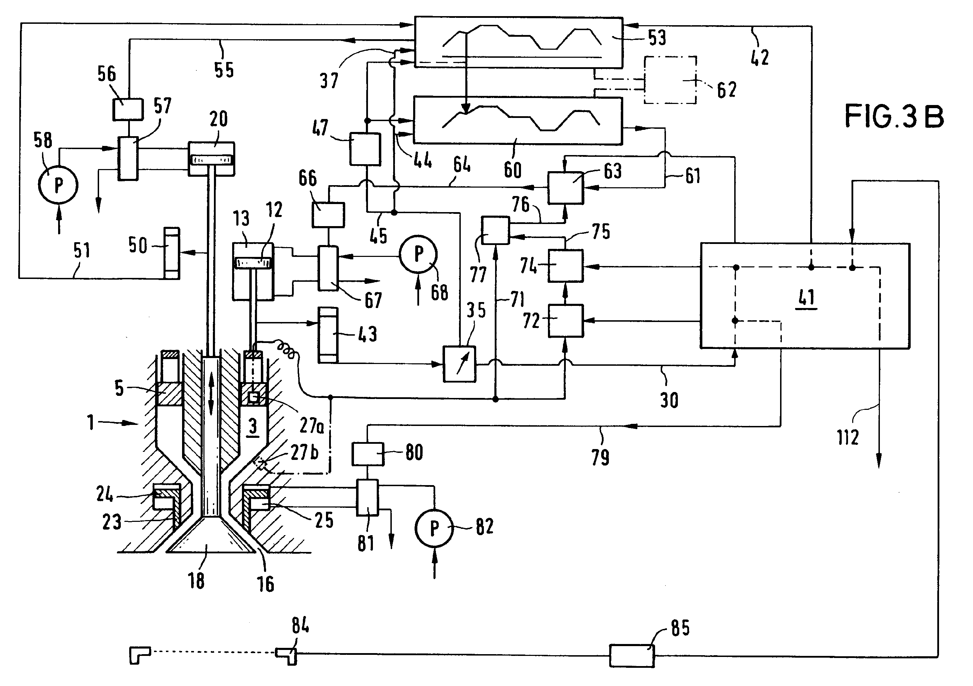

Ein weiteres Beispiel einer Regel- und Steuereinrichtung ist in Fig. 3b dargestellt. Bei einer Regeleinrichtung dieser Art werden die Druckschwankungen dadurch vermieden, daß während der Füllphase und während der Übergänge von Füllen-Entleeren und Entleeren-Füllen die Beaufschlagung des Ringkolbens 5 in Abhängigkeit vom Druck geregelt wird, wohingegen während der Ausstoßphase die Bewegung des Ringkolbens 5 in oben beschriebener Weise nach einem Geschwindigkeitsprogrammgeber 60 ausgeführt wird. Zu diesem Zweck ist ein Umschalter 63 vorgesehen, der durch die Maschinensteuerung 41 während der Ausstoßphase so geschaltet ist, daß der Geschwindigkeitsprogrammgeber 60 über die Signalleitungen 61, 64 mit der Steuereinrichtung 66 für die Antriebseinheit des Ringkolbens 5 in Verbindung steht und eine Stellgröße erzeugt, die eine Bewegung des Ringkolbens 5 zur Folge hat derart, daß Druckschwankungen weitestgehend vermieden werden. Im einzelnen ist die Anordnung so getroffen, daß jeder Spaltbreite, die durch die in der Ausstoßphase wirksame Wanddickensteuerung vorgesehen ist, eine Geschwindigkeit in Form eines festen Programms zugeordnet wird, wobei die Geschwindigkeit so gewählt oder festgelegt ist, daß sich in Verbindung mit dem jeweiligen Ausstrittspalt über die gesamte Dauer der Entleerungsphase ein nahezu gleicher Druck ergibt. Hierzu kannes zweckmäßig sein, die Geschwindigkeit mit einem in der Fig. 3b strichpunktiert dargestellten Mikrocomputer 62 zu jedem Zeitpunkt der Austoßphase entsprechend der jeweiligen Spaltbreite zu berechnen. Zur Geschwindigkeitserfassung ist die Vorgabeeinheit 35 über die Zweigleitung 45 mit einem Geschwindigkeitsberechner 47 verbunden, der mit dem Geschwindigkeitsprogrammgeber 60 in einem Regelkreis zusammenwirkt. Auf diese Weise kann jedem Wegabschnitt des Ringkolbens 5 durch die Vorgabeeinrichtung 36, die über die Leitung 37 mit der Wanddickensteuerung 53 und über die Leitung 44 mit dem Geschwindigkeitsprogrammgeber 60 verbunden ist, sowohl eine Spaltbreite als auch eine Kolbengeschwindigkeit derart zugeordnet werden, daß zum einen ein Vorformling mit einer gewünschten Wanddickenverteilung und zum anderen ein Drucverlauf erreicht wird, der Druckschwankungen weitestgehend vermeidet. Zumindest kann ein Druckverlauf erreicht werden, der sich nicht störend auf die Laminatbildung auswirkt.

Während der Füllphase erfolgt die Beaufschlagung des Ringkolbens 5 in Abhängigkeit vom Druck. Dazu ist eine Registriereinheit 72 vorgesehen, die während der Ausstoßphase durch die Maschinensteuerung 41 aktiviert wird, und den durch den Druckaufnehmer 27a oder 27b gemessenen Druck registriert. Zum Beginn der Füllphase wird in einer Rechnereinheit 74, die mit der Registriereinheit 72 verbunden ist, ein Druck-Sollwert dem Druckregler 77, der über die Leitung 71 mit dem Druckaufnehmer 27a oder 27b verbunden ist, über die Signalleitung 75 vorgegeben. Dieser Druck wird während der Füllphase aufrechterhalten und liegt in einem Druckbereich, der dem Druckbereich der auftretenden Drücke während der Entleerungsphase entspricht. Der Umschalter 63 ist daher durch die Maschinensteuerung so geschaltet, daß der Druckregler über die Signalleitungen 76 und 64 mit der Steuereinrichtung 66 für den hydraulischen Antrieb des Ringkolbens 5 zusammenwirkt.

Insbesondere treten bei diesem Ausführungsbeispiel keine Schwankungen hinsichtlich der Zykluszeit auf, wobei allerdings geringfügig höhere Druckschwankungen während der Ausstoßphase auftreten können als bei der Regelung gemäß Fig. 3a.

In diesen Ausführungsbeispielen ist vorgesehen, daß das Ende der Ausstoßphase durch das Zurücklegen eines vorgegebenen Weges des Ringkolbens 5 signalisiert wird. Dies ist vorteilhaft, da somit gewährleistet wird, daß immer die gleiche Menge Laminat für den Vorformling ausgestoßen wird. Es kann aber auch vorgesehen werden, daß der Ausstoßvorgang nach Erreichen einer bestimmten Länge des Vorformlings, die z. B. durch eine Lichtschranke 84 - wie in Fig. 3b dargestellt - erfaßt wird, beendet wird. Dies setzt aber eine Berücksichtigung der Längung und Rückstellung des ausgestoßenen Materials voraus, die unter Verwendung weiterer Steuerungseinrichtungen 85 in den vorhandenen Regelkreis eingebaut werden müssen.

Weiterhin können auch andere Schaltungsweisen vorgesehen werden, die ein Aufrechterhalten des Druckes insbesondere während der Füllphase und der Übergänge Füllen-Entleeren und Entleeren-Füllen ermöglichen, ohne den Geltungsbereich der Erfindung einzuschränken.

Zur Erläuterung wird darauf hingewiesen, daß sich das Volumen zur Bildung eines Vorformlings, wie oben beschrieben, aus dem gespeicherten und dem in der Ausstoßphase durch die kontinuierlich laufenden Extruder hinzu extrudierten Material zusammensetzt. Demnach ist der minimale Hub des Ringkolbens 5, der einem Laminatvolumen zur Bildung eines Vorformlings entspricht, gerade so bemessen, daß dieses Volumen zuzüglich des hinzu extrudierten Materials während der Ausstoßphase gerade das Volumen des Vorformlings ergibt.

Wenngleich vorstehend nur Ausführungsbeispiele mit einem Speicherraum beschrieben werden, ist die Erfindung auch anwendbar bei Verfahren und Vorrichtung zum Herstellen von Hohlkörpern aus thermoplastischem Kunststoff, bei dem Extrusionsköpfe mit zwei oder mehr Speicherräumen benutzt werden. So ist es beispielsweise möglich, für jede Schicht des Laminats oder für jede Materialart einen besonderen Speicherraum vorzusehen, wobei jedem Speicherraum jeweils ein Mittel zum Entleeren desselben zugeordnet ist.

## Patentansprüche

1. Verfahren zum Herstellen von Hohlkörpern aus thermoplastischem Kunststoff, deren Wandung aus einem wenigstens zwei Schichten aufweisenden Laminat besteht, mittels Extrusionsblasformen, bei welchem Verfahren zunächst Vorformlinge, deren Wandung eine entsprechende Anzahl von Schichten aufweist, absatzweise hergestellt werden unter Verwendung einer Extrusionseinheit, die wenigstens zwei kontinuierlich laufende Extruder und einen gemeinsamen Extrusionskopf (1) aufweist, wobei die Extrusionseinheit mit wenigstens einem Speicherraum (3) zum Speichern von in den Extrudern plastifizierten Materialien und mit wenigstens einem zwischen zwei Endpositionen durch Antriebsmittel hubartig hin- und herbewegbaren Mittel zum Entleeren (5) dieses wenigstens einen Speicherraumes (3) zur Bildung eines Vorformlings versehen ist und Materialströme, deren Anzahl der Anzahl der Schichten in der Wandung des Hohlkörpers entspricht, im Bereich des Extrusionskopfes derart zusammengeführt werden, daß einander benachbarte Materialströme in wenigstens einem Laminatbildungsbereich miteinander zu einem Laminat für die Wandung des Vorformlings verbunden werden, und das Verfahren wenigstens zwei Betriebsphasen aufweist und in einer der Betriebsphasen der wenigstens eine Speicherraum unter Verdrängung des wenigstens einen Mittels zum Entleeren (5) des wenigstens einen Speicherraums (3) gefüllt und während der anderen Betriebsphase das in dem wenigstens einen Speicherraum befindliche Kunststoffmaterial durch das wenigstens eine Mittel zum Entleeren des Speicherraumes durch einen Verbindungskanal (7) innerhalb des Extrusionskopfes in Richtung auf die Austrittsöffnung (16) vorbewegt wird, wobei aus der Austrittsöffnung ein Volumenabschnitt des Laminats zur Bildung des Vorformlings ausgestoßen wird und ein Teilabschnitt des Volumenabschnittes innerhalb des Formnests einer unterteilten Blasform (29) unter innerem Überdruck aufgeweitet wird, dadurch gekennzeichnet, daß die Übergänge vom Füllen zum Entleeren sowie vom Entleeren zum Füllen des wenigstens einen Speicherraumes durch Öffnen bzw. Schließen der Verbindung (7) zwischen dem wenigstens einen Speicherraum (3) und der Austrittsöffnung (16) bewirkt werden und die durch die Antriebsmittel (12, 13) bewirkte Beaufschlagung des wenigstens einen Mittels zum Entleeren (5) des wenigstens einen Speicherraumes (3) geregelt wird derart, daß während der Übergänge vom Füllen zum Entleeren sowie vom Entleeren zum Füllen der Druck innerhalb des Extrusionskopfes zumindest in dem wenigstens einen Laminatbildungsbereich keine Änderungen erfährt, durch welche das Laminat funktionsbeeinträchtigend gestört wird.

2. Verfahren nach Anspruch 1, dadurch gekennzeichnet, daß der Druck innerhalb des Extrusionskopfes zumindest in dem wenigstens einen Laminatbildungsbereich auch während der Übergänge vom Entleeren zum Füllen und vom Füllen zum Entleeren durch entsprechende, durch die Antriebsmittel (12, 13) bewirkte Beaufschlagung des wenigstens einen Mittels zum Entleeren (5) des wenigstens einen Speicherraums (3) im wesentlichen konstant gehalten wird.

3. Verfahren nach Anspruch 1, dadurch gekennzeichnet, daß der Druck auch während der Betriebsphase, in welcher der wenigstens eine Speicherraum (3) gefüllt wird, zumindest in dem wenigstens einen Laminatbildungsbereich keine Änderungen erfährt, durch welche das Laminat funktionsbeeinträchtigend gestört wird.

4. Verfahren nach Anspruch 1, dadurch gekennzeichnet, daß der Druck auch während der Betriebsphase, in welcher der wenigstens eine Speicherraum (3) gefüllt wird, zumindest in dem wenigstens einen Laminatbildungsbereich im wesentlichen konstant gehalten wird.

5. Verfahren nach Anspruch 1, dadurch gekennzeichnet, daß der Druck auch während der Betriebsphase, in welcher der wenigstens eine Speicherraum (3) entleert wird, zumindest in dem wenigstens einen Laminatbildungsbereich keine Änderungen erfährt, durch welche das Laminat funktionsbeeinträchtigend gestört wird.

6. Verfahren nach Anspruch 1, dadurch gekennzeichnet, daß der Druck auch während der Betriebsphase, in welcher der wenigstens eine Speicherraum (3) entleert wird, zumindest in dem wenigstens einen Laminatbildungsbereich im wesentlichen konstant gehalten wird.

7. Verfahren nach Anspruch 1, dadurch gekennzeichnet, daß zumindest während eines Teilabschnittes des gesamten Arbeitszyklus' die durch die Antriebsmittel (12, 13) bewirkte Beaufschlagung des wenigstens einen Mittels zum Entleeren (5) des wenigstens einen Speicherraums (3) in Abhängigkeit vom Druck innerhalb des Extrusionskopfes (1) so geregelt wird, daß der Druck in dem wenigstens einen Laminatbildungsbereich keine Änderungen erfährt, durch welche das Laminat funktionsbeeinträchtigend gestört wird.

8. Verfahren nach Anspruch 1, dadurch gekennzeichnet, daß während des gesamten Arbeitszyklus' die durch die Antriebsmittel (12, 13) bewirkte Beaufschlagung des wenigstens einen Mittels zum Entleeren (5) des wenigstens einen Speicherraums (3) in Abhängigkeit vom Druck innerhalb des Extrusionskopfes (1) so geregelt wird, daß der Druck in dem wenigstens einen Laminatbildungsbereich im wesentlichen konstant gehalten wird.

9. Verfahren nach Anspruch 1, dadurch gekennzeichnet, daß die Größe der Austrittsöffnung (16) des Extrusionskopfes (1) nach einem vorgegebenen Programm zur Beeinflussung der Dicke der Wandung des Vorformlings verändert wird und die durch die Antriebsmittel (12, 13) bewirkte Beaufschlagung des wenigstens einen Mittels zum Entleeren (5) des wenigstens einen Speicherraums (3) zur Beeinflussung von dessen Geschwindigkeit in Abhängigkeit von diesem Programm während der Betriebsphase, in welcher der Speicherraum entleert wird, so angepaßt wird, daß der Druck in dem wengistens einen Laminatbildungsbereich keine Änderungen erfährt, durch welche das Laminat funktionsbeeinträchtigend gestört wird.

10. Verfahren nach Anspruch 1, dadurch gekennzeichnet, daß die Größe der Austrittsöffnung (16) des Extrusionskopfes (1) nach einem vorgegebenen Programm zur Beeinflussung der Dicke der Wandung des Vorformlings verändert wird und die durch die Antriebsmittel (12, 13) bewirkte Beaufschlagung des wenigstens einen Mittels zum Entleeren (5) des wenigstens einen Speicherraums (3) zur Beeinflussung von dessen Geschwindigkeit in Abhängigkeit von diesem Programm während der Betriebsphase, in welcher der Speicherraum entleert wird, so angepaßt wird, daß der Druck in dem wenigstens einen Laminatbildungsbereich im wesentlichen konstant gehalten wird.

11. Verfahren nach Anspruch 1, dadurch gekennzeichnet, daß bei Abweichungen von einer vorbestimmten Dauer der Ausstoßzeit die durch die Antriebsmittel bewirkte Beaufschlagung des wenigstens einen Mittels zum Entleeren (5) des wenigstens einen Speicherraumes (3) zur Beeinflussung von dessen Geschwindigkeit geändert wird derart, daß bei zu kurzer Ausstoßzeit der Druck in der Kunststoffmasse erniedrigt und bei zu langer Ausstoßzeit der Druck in der Kunststoffmasse erhöht wird und die Druckänderungen so durchgeführt werden, daß der Druck in dem wenigstens einen Laminatbildungsbereich keine Änderung erfährt, durch welche das Laminat funktionsbeeinträchtigend gestört wird.

12. Verfahren nach Anspruch 11, dadurch gekennzeichnet, daß die Änderung des Druckes in der Kunststoffmasse einen zur Anpassung der Dauer der Ausstoßzeit an einen vorgegebenen Wert während der Betriebsphase, in welcher der wenigstens eine Speicherraum (3) gefüllt wird, erfolgt.

13. Verfahren nach Anspruch 1, dadurch gekennzeichnet, daß das Schließen der Verbindung (7) zwischen dem wengistens einen Speicherraum (3) und der Austrittsöffnung (16) in Abhängigkeit vom Volumen des ausgestoßenen Laminats, gemessen an einen vorgegebenen Weg des wenigstens einen Mittels zum Entleeren (5) des wenigstens einen Speicherraums (3) bewirkt wird.

14. Verfahren nach Anspruch 1, dadurch gekennzeichnet, daß das Schließen der Verbindung (7) zwischen dem wenigsten einen Speicherraum (3) und der Austrittsöffnung (16) zeitabhängig bewirkt wird.

15. Verfahren nach Anspruch 1, dadurch gekennzeichnet, daß das Schließen der Verbindung (7) zwischen dem wenigstens einen Speicherraum (3) und der Austrittsöffnung (16) in Abhängigkeit von der ausgestoßenen Länge des Vorformlings, die z. B. durch eine Lichtschranke festgestellt wird, bewirkt wird.

16. Verfahren nach Anspruch 1, dadurch gekennzeichnet, daß das Öffnen der Verbindung (7) zwischen dem wenigsten einen Speicherraum (3) und der Austrittsöffnung (16) in Abhängigkeit von einem vorgegebenen Weg des wenigstens einen Mittels zum Entleeren (5) des wenigstens einen Speicherraums (3) bewirkt wird, welcher Weg den gefüllten Zustand des wenigstens einen Speicherraums (3) entspricht.

17. Verfahren nach Anspruch 1, dadurch gekennzeichnet, daß das Öffnen der Verbindung (7) zwischen dem wenigstens einen Speicherraum (3) und der Austrittsöffnung (16) zeitabhängig bewirkt wird.

18. Verfahren nach Anspruch 17, dadurch gekennzeichnet, daß das Öffnen der Verbindung (7) zwischen dem wenigstens einen Speicherraum (3) und der Austrittsöffnung (16) in Abhängigkeit vom Erreichen eines bestimmten Betriebspunktes der zugeordneten Blasformmaschine bewirkt wird.

19. Verfahren nach Anspruch 1 und 2, dadurch gekennzeichnet, daß bei zu erwartenden geringen Druckschwankungen während der Entleerungsphase, z. B. bei fehlender oder nur geringe Änderungen bewirkender Wanddickensteuerung, das Mittel zum Entleeren (5) des wenigstens einen Speicherraums (3) während der Entleerungsphase mit konstanter Geschwindigkeit bewegt wird und der Druck innerhalb des Extrusionskopfes während der Füllphase durch entsprechende Beaufschlagung des Antriebsmittels (12, 13) für das wenigstens eine Mittel zum Entleeren (5) des wenigstens einen Speicherraums (3) in einem Bereich gehalten wird, der zumindest näherungsweise dem Druckbereich entspricht, in welchem die Drücke während der Entleerungsphase liegen.

20. Vorrichtung zum Herstellen von Hohlkörpern aus thermoplastischem Kunststoff, deren Wandung aus einem wenigstens zwei Schichten aufweisenden Laminat besteht, durch Extrusions-Blasformen mit einer Extrusionseinheit, die wenigstens zwei Extruder und einen gemeinsamen Extrusionskopf (1) mit einer ringförmigen Austrittsöffnung (16) aufweist, wobei die Extrusionseinheit mit wenigstens einem Speicherraum (3) zum Speichern des in den Extrudern kontinuierlich plastifizierten Materials und mit wenigstens einem zwischen zwei Endpositionen hubartig hin- und herbewegbaren Mittel (5) zum Entleeren des wenigstens einen Speicherraums (3) zur Bildung eines Vorformlings versehen und die Vorrichtung wenigstens eine geteilte, mit Abquetschkanten versehene Blasform (29) mit wenigstens einem Formnest aufweist, innerhalb dessen zumindest ein Teilbereich des Mittelabschnitts des Vorformlings unter innerem Überdruck zum Hohlkörper aufgeweitet wird, und an beiden Enden des Mittelabschnittes jeweils ein Endabschnitt als Überschußmaterial abgequetscht wird und innerhalb des Extrusionskopfes (1) wenigstens ein Laminatbildungsbereich vorhanden ist, in welchem die Materialströme für die einzelnen Schichten (8, 9, 10) zur Bildung des Laminats miteinander verbunden werden, und der Laminatbildungsbereich über einen Verbindungskanal (7), durch welchen das Laminat in Richtung auf die Austrittsöffnung (16) fließt, mit letzterer verbunden ist, dadurch gekennzeichnet, daß der Verbindungskanal (7) durch wenigstens ein vorzugsweise hin- und herbewegbares Verschlußmittel (23) verschließbar ist, durch welches die Entleerungsphase oder die Füllphase eingeleitet wird, und eine Einrichtung vorgesehen ist, durch welche das Antriebsmittel (12, 13) für das Mittel (5) zum Entleeren des wenigstens einen Speicherraums (3) auch während der Füllphase derart beaufschlagbar ist, daß während der Übergänge vom Füllen zum Entleeren sowie vom Entleeren zum Füllen der Druck innerhalb des Extrusionskopfes zumindest in dem wenigstens einen Laminatbildungsbereich keine Änderungen erfährt, durch welche das Laminat funktionsbeeinträchtigend gestört wird.

21. Vorrichtung nach Anspruch 20, dadurch gekennzeichnet, daß der Verbindungskanal (7) durch das Verschlußmittel (23) in dem Bereich verschließbar ist, der durch den Düsenkern (18) und den ihn umgebenden Abschnitt des Gehäuses (2) begrenzt ist.

22. Vorrichtung nach Anspruch 20, dadurch gekennzeichnet, daß der im Verbindungskanal (7) wirksame Bereich des Verschlußmittels (23) ein geringes bauliches Volumen aufweist, so daß möglichst wenig Laminat innerhalb des Verbindungskanals (7) durch das Verschließen desselben zerstört wird.

23. Vorrichtung nach Anspruch 20, dadurch gekennzeichnet, daß die Betriebsmittel (24, 25) für das Verschlußelement (23) eine hydraulische Kolben-Zylindereinheit und innerhalb des Extrusionskopfes (1) angeordnet ist.

24. Vorrichtung nach Anspruch 20, dadurch gekennzeichnet, daß der Extrusionskopf (1) mit wenigstens einem Druckmeßmittel (27) zum Messen des Druckes des im Extrusionskopf befindlichen Laminats versehen ist.

25. Vorrichtung nach Anspruch 24, dadurch gekennzeichnet, das Druckmeßmittel (27) in der Nähe des Laminatbildungsbereiches angeordnet ist.

26. Vorrichtung nach Anspruch 20, dadurch gekennzeichnet, daß das Druckmeßmittel (27) im Bereich der Stirnfläche des wenigstens einen Mittels (6) zum Entleeren des Speicherraumes (3) angeordnet ist.

## Claims

1. A process for the production of hollow bodies from thermoplastic material, the wall of which comprises a laminate having at least two layers, by means of extrusion blow moulding, in which process firstly preforms whose wall has a corresponding number of layers are produced in a batch-wise manner using an extrusion unit which has at least two continuously operating extruders and a common extrusion head (1), wherein the extrusion unit is provided with at least one storage chamber (3) for storage of materials plasticised in the extruders and at least one means (5) reciprocatable with a stroke movement between two limit positions by drive means for emptying said at least one storage chamber (3) to form a preform and flows of material, the number of which corresponds to the number of the layers in the wall of the hollow body are brought together in the region of the extrusion head in such a way that mutually adjacent flows of material are joined together in at least one laminate-formation region to form a laminate for the wall of the preform, and the process has at least two operating phases and in one of the operating phases the at least one storage chamber is filled, involving displacement of the at least one means (5) for emptying the at least one storage chamber (3), and during the other operating phase the plastics material in the at least one storage chamber is advanced by the at least one means for emptying the storage chamber through a communicating duct (7) within the extrusion head towards the outlet opening (16), wherein a volume portion of the laminate is ejected from the outlet opening to form the preform and a part of the volume portion is expanded within the mould cavity of a divided blow moulding mould (29) under an internal increased pressure, characterised in that the transitions from filling to emptying and from emptying to filling of the at least one storage chamber are produced by opening and closing respectively the communication (7) between the at least one storage chamber (3) and the outlet opening (16) and the actuation, by the drive means (12, 13), of the at least one means (5) for emptying the at least one storage chamber (3) is regulated in such a way that during the transitions from filling to emptying and from emptying to filling the pressure within the extrusion head is not subject at least in the at least one laminate-formation region to any changes by which the laminate is disturbed in such a way as to impair its function.

2. A process according to claim 1 characterised in that the pressure within the extrusion head is kept substantially constant at least in the at least one laminate-formation region even during the transitions from emptying to filling and from filling to emptying by suitable actuation, by the drive means (12, 13), of the at least one means (5) for emptying the at least one storage chamber (3).

3. A process according to claim 1 characterised in that even during the operating phase in which the at least one storage chamber (3) is filled the pressure is not subject at least in the at least one laminate-formation region to any changes by which the laminate is disturbed in such a way as to impair its function.

4. A process according to claim 1 characterised in that even during the operating phase in which the at least one storage chamber (3) is filled the pressure is kept substantially constant at least in the at least one laminate-formation region.

5. A process according to claim 1 characterised in that even during the operating phase in which the at least one storage chamber (3) is emptied the pressure is not subject at least in the at least one laminate-formation region to any changes by which the laminate is disturbed in such a way as to impair its function.

6. A process according to claim 1 characterised in that even during the operating phase in which the at least one storage chamber (3) is emptied the pressure is kept substantially constant at least in the at least one laminate-formation region.

7. A process according to claim 1 characterised in that at least during a part of the entire working cycle actuation by the drive means (12, 13) of the at least one means (5) for emptying the at least one storage chamber (3) is so regulated in dependence on the pressure within the extrusion head (1) that the pressure in the at least one laminate-formation region is not subject to any changes by which the laminate is disturbed in such a way as to impair its function.

8. A process according to claim 1 characterised in that during the entire working cycle actuation by the drive means (12, 13) of the at least one means (5) for emptying the at least one storage chamber (3) is so regulated in dependence on the pressure within the extrusion head (1) that the pressure is kept substantially constant in the at least one laminate-formation region.

9. A process according to claim 1 characterised in that the size of the outlet opening (16) of the extrusion head (1) is altered in accordance with a predetermined program to influence the thickness of the wall of the preform and actuation by the drive means (12, 13) of the at least one means (5) for emptying the at least one storage chamber (3) is so adapted to influence the speed thereof in dependence on said program during the operating phase in which the storage chamber is emptied that the pressure in the at least one laminate-formation region is not subject to any changes by which the laminate is disturbed in such a way as to impair its function.

10. A process according to claim 1 characterised in that the size of the outlet opening (16) of the extrusion head (1) is altered in accordance with a predetermined program to influence the thickness of the wall of the preform and actuation by the drive means (12, 13) of the at least one means (5) for emptying the at least one storage chamber (3) is so adapted to influence the speed thereof in dependence on said program during the operating phase in which the storage chamber is emptied that the pressure in the at least one laminate-formation region is kept substantially constant.

11. A process according to claim 1 characterised in that in the event of deviations from a predetermined duration in respect of the ejection time actuation by the drive means of the at least one means (5) for emptying the at least one storage chamber (3) is so altered to influence the speed thereof that with an excessively short ejection time the pressure in the plastics material is reduced and with an excessively long ejection time the pressure in the plastics material is increased and the changes in pressure are such that the pressure in the at least one laminate-formation region is not subject to any changes by which the laminate is disturbed in such a way as to impair its function.

12. A process according to claim 11 characterised in that the change in the pressure in the plastics material is effected to adapt the duration of the ejection time to a predetermined value during the operating phase in which the at least one storage chamber (3) is filled.

13. A process according to claim 1 characterised in that closure of the communication (7) between the at least one storage chamber (3) and the outlet opening (16) is produced in dependence on the volume of the ejected laminate as measured at a predetermined travel of the at least one means (5) for emptying the at least one storage chamber (3).

14. A process according to claim 1 characterised in that closure of the communication (7) between the at least one storage chamber (3) and the outlet opening (16) is produced in dependence on time.

15. A process according to claim 1 characterised in that closure of the communication (7) between the at least one storage chamber (3) and the outlet opening (16) is produced in dependence on the ejected length of the preform which is detected for example by a light barrier means.

16. A process according to claim 1 characterised in that opening of the communication (7) between the at least one storage chamber (3) and the outlet opening (16) is produced in dependence on a predetermined travel of the at least one means (5) for emptying the at least one storage chamber (3), said travel corresponding to the filled condition of the at least one storage chamber (3).

17. A process according to claim 1 characterised in that opening of the communication (7) between the at least one storage chamber (3) and the outlet opening (16) is produced in dependence on time.

18. A process according to claim 17 characterised in that opening of the communication (7) between the at least one storage chamber (3) and the outlet opening (16) is produced in dependence on reaching a predetermined operating point of the associated blow moulding machine.

19. A process according to claim 1 and claim 2 characterised in that, with the expectation of slight fluctuations in pressure during the emptying phase, for example with no wall thickness control or with a wall thickness control which produces only slight changes, the means (5) for emptying the at least one storage chamber (3) is moved during the emptying phase at a constant speed and the pressure within the extrusion head is kept during the filling phase, by suitable actuation of the drive means (12, 13) for the at least one means (5) for emptying the at least one storage chamber (3), in a range which at least approximately corresponds to the pressure range in which the pressures lie during the emptying phase.

20. Apparatus for the production of hollow bodies from thermoplastic material, the wall of which comprises a laminate having at least two layers, by means of extrusion blow moulding, comprising an extrusion unit which has at least two extruders and a common extrusion head (1) with an annular outlet opening (16), wherein the extrusion unit is provided with at least one storage chamber (3) for storage of the material which is continuously plasticised in the extruders and with at least one means (5) which is reciprocatable with a stroke movement between two limit positions for emptying the at least one storage chamber (3) to form a preform, and the apparatus has at least one divided blow moulding mould (29) provided with squeezing-off edges, with at least one mould cavity, within which at least one part of the central portion of the preform is expanded under internal increased pressure to provide the hollow body, and a respective end portion is squeezed off as excess material at each of the two ends of the central portion, and provided within the extrusion head (1) is at least one laminate-formation region in which the flows of material for the individual layers (8, 9, 10) are joined together to form the laminate and the laminate-formation region is connected to the outlet opening (16) by way of a communicating duct (7) through which the laminate flows towards the outlet opening (16), characterised in that the communicating duct (7) is closable by at least one preferably reciprocatable closure means (23) by which the emptying phase or the filling phase is initiated, and there is provided an arrangement by which the drive means (12, 13) for the means (5) for emptying the at least one storage chamber (3) can be actuated even during the filling phase in such a way that during the transitions from filling to emptying and from emptying to filling the pressure within the extrusion head is not subject at least in the at least one laminate-formation region to any changes by which the laminate is disturbed in such a way as to impair its function.

21. Apparatus according to claim 20 characterised in that the communicating duct (7) is closable by the closure means (23) in the region which is defined by the nozzle core (18) and the portion (21) surrounding same of the housing (2).

22. Apparatus according to claim 20 characterised in that the region of the closure means (23), which is operative in the communicating duct (7) is of a small structural volume so that as little laminate as possible is disturbed within the communicating duct (7) by closure thereof.

23. Apparatus according to claim 20 characterised in that the operating means (24, 25) for the closure element (23) is a hydraulic piston-cylinder unit and is arranged within the extrusion head (1).

24. Apparatus according to claim 20 characterised in that the extrusion head (1) is provided with at least one pressure measuring means (27) for measuring the pressure of the laminate in the extrusion head.

25. Apparatus according to claim 24 characterised in that the pressure measuring means (27) is arranged in the vicinity of the laminate-formation region.

26. Apparatus according to claim 20 characterised in that the pressure measuring means (27) is arranged in the region of the end face of the at least one means (5) for emptying the storage chamber (3).

## Revendications

1. Procédé pour fabriquer des corps creux en matière thermoplastique dont la paroi est constituée de matière laminée formée d'au moins deux couches, en opérant par extrusion sur une succession d'ébauches qu'on moule par soufflage, ces ébauches étant d'abord produites une par une avec une paroi comportant un nombre approprié de couches, dans une machine d'extrusion, alimentée par au moins deux extrudeuses à débit continu et comportant une tête d'extrusion commune (1) et au moins une chambre d'accumulation (3) pour recevoir en attente les matières plastifiées provenant des extrudeuses, et au moins un organe de refoulement (5) actionné en va-et-vient entre deux positions extrêmes par un système moteur approprié, pour assurer la vidange de chaque chambre d'accumulation (3) afin de réaliser une ébauche extrudée, des moyens étant prévus pour amener dans la tête d'extrusion des courants de matière, en nombre correspondant au nombre des couches de la paroi du corps creux à fabriquer, pour que ces courants de matière ainsi rendus adjacents se rejoignent dans au moins une zone de formation de la matière laminée, donnant ainsi naissance à cette matière laminée prévue pour la paroi de chaque ébauche, le procédé comportant au moins deux phases opératoires, telles que dans l'une de ces phases chaque chambre d'accumulation (3) se trouve remplie avec mouvement de recul correspondant de l'organe de refoulement associé (5), alors que l'autre phase opératoire consiste à refouler la matière plastique contenue dans chaque chambre d'accumulation (3) au moyen de l'organe de refoulement associé (5), pour envoyer cette matière dans un canal de liaison (7) prévu dans la tête d'extrusion, en direction de l'orifice d'éjection (16), par lequel on fait ainsi sortir un volume élémentaire de matière laminée prévue pour réaliser une ébauche, une partie de ce volume élémentaire de matière étant ensuite soumise à un traitement d'expansion dans la cavité de moulage d'un moule de soufflage en plusieurs parties (29) sous l'effet d'une surpression interne, caractérisé en ce qu'on réalise les transitions entre remplissage-vidange et entre vidange-remplissage de chaque chambre d'accumulation respectivement, en ouvrant et en fermant le canal de liaison (7) existant entre chaque chambre d'accumulation (3) et l'orifice d'éjection (16), et en ce qu'on règle l'effet du système moteur (12,13) associé à l'organe de refoulement (5) de chaque chambre d'accumulation (3), pour que, pendant les périodes transitoires entre remplissage-vidange et vidange-remplissage, la pression existant à l'intérieur de la tête d'extrusion reste comprise, au moins dans la zone de formation de la matière laminée, entre des limites au-delà desquelles la formation de la matière laminée est affectée d'une manière défavorable.

2. Procédé selon la revendication 1, caractérisé en ce qu'on maintient à une valeur sensiblement constante la pression à l'intérieur de la tête d'extrusion au moins à l'endroit de chaque zone de formation de la matière laminée, même pendant les périodes transitoires entre vidange-remplissage et remplissage-vidange, en agissant de manière appropriée sur l'effet du système moteur (12,13) associé à l'organe de refoulement (5) prévu pour assurer la vidange de chaque chambre d'accumulation (3).

3. Procédé selon la revendication 1, caractérisé en ce que, même pendant la phase de remplissage de chaque chambre d'accumulation (3), et au moins dans la zone de formation de la matière laminée de chaque chambre, l'on évite toute variation de la pression susceptible d'affecter d'une manière défavorable la formation de la matière laminée.

4. Procédé selon la revendication 1, caractérisé en ce que, même pendant la phase de remplissage de chaque chambre d'accumulation (3) et au moins dans la zone de formation de la matière laminée de chaque chambre, l'on maintient la pression à une valeur sensiblement constante.

5. Procédé selon la revendication 1, caractérisé en ce que, même pendant la phase de vidange de chaque chambre d'accumulation (3) et au moins dans la zone de formation de la matière laminée de chaque chambre, l'on évite toute variation de pression susceptible d'affecter d'une manière défavorable la formation de la matière laminée.

6. Procédé selon la revendication 1, caractérisé en ce que, même pendant la phase de vidange de chaque chambre d'accumulation (3) et au moins dans la zone de formation de la matière laminée de chaque chambre, l'on maintient la pression à une valeur sensiblement constante.

7. Procédé selon la revendication 1, caractérisé en ce que, au moins pendant une partie de la durée du cycle opératoire complet, l'on règle l'effet du système moteur (12,13) associé à l'organe de refoulement (5) prévu pour assurer la vidange de chaque chambre d'accumulation (3), en fonction de la pression qui existe à l'intérieur de la tête d'extrusion (1), de manière à éviter, au moins dans chaque zone de formation de la matière laminée, toute variation de pression susceptible d'affecter défavorablement la formation de la matière laminée.

8. Procédé selon la revendication 1, caractérisé en ce que, pendant tout le cycle de travail, l'on règle l'effet du système moteur (12,13) de l'organe de refoulement (5) prévu pour assurer la vidange de chaque chambre d'accumulation (3), en fonction de la pression qui existe à l'intérieur de la tête d'extrusion (1), de manière à maintenir la pression sensiblement constante dans chaque zone de formation de la matière laminée.

9. Procédé selon la revendication 1, caractérisé en ce qu'on fait varier l'importance de l'orifice d'éjection (16) de la tête d'extrusion (1) suivant un programme prédéterminé, pour agir sur l'épaisseur de la paroi de l'ébauche de moulage, et en ce qu'on adapte l'effet du système moteur (12,13) de l'organe de refoulement (5) prévu pour assurer la vidange de chaque chambre d'accumulation (3), afin d'agir sur la vitesse de cet organe de refoulement (5) en fonction du programme en question pendant la phase de vidange de la chambre d'accumulation, de manière à éviter dans chaque zone de formation de la matière laminée toute variation de pression susceptible d'affecter défavorablement la formation de la matière laminée.

10. Procédé selon la revendication 1, caractérisé en ce qu'on fait varier l'importance de l'orifice d'éjection (16) de la tête d'extrusion (1) suivant un programme prédéterminé, afin d'agir sur l'épaisseur de la paroi de l'ébauche de moulage, et en ce qu'on adapte l'effet du système moteur (12,13) de l'organe de refoulement (5) prévu pour assurer la vidange de chaque chambre d'accumulation (3), afin d'agir sur la vitesse de cet organe de refoulement (5) en fonction du programme en question pendant la phase de vidange de la chambre d'accumulation, pour maintenir sensiblement constante la pression dans chaque zone de formation de la matière laminée.

11. Procédé selon la revendication 1, caractérisé en ce qu'on fait varier la durée de la période de refoulement, par rapport à une valeur prédéterminée de cette durée, en modifiant l'effet du système moteur (12,13) de l'organe de refoulement (5) prévu pour assurer la vidange de chaque chambre d'accumulation (3), afin d'agir sur la vitesse de cet organe, de manière à obtenir pour une durée de refoulement trop faible une pression moindre dans la masse de matière plastique, et à obtenir pour une durée de refoulement trop forte une augmentation de pression dans la masse de matière plastique, en effectuant ces modifications de pression de telle manière que la pression dans chaque zone de formation de la matière laminée ne subisse aucune variation susceptible d'affecter défavorablement la formation de cette matière.

12. Procédé selon la revendication 11, caractérisé en ce qu'on effectue la modification de la pression au sein de la masse de matière plastique en vue d'obtenir une pression permettant d'adapter à une valeur prédéterminée la durée de la période de refoulement, en effectuant cette modification pendant la période de remplissage de chaque chambre d'accumulation (3).

13. Procédé selon la revendication 1, caractérisé en ce qu'on commande la fermeture du canal de liaison (7) reliant chaque chambre d'accumulation (3) à l'orifice d'éjection (16) en fonction du volume de matière laminée éjectée, ce volume étant mesuré d'après une valeur prédéterminée de la course de l'organe de refoulement (5) prévu pour assurer la vidange de chaque chambre d'accumulation (3).

14. Procédé selon la revendication 1, caractérisé en ce qu'on commande la fermeture du canal de liaison (7) allant de chaque chambre d'accumulation (3) à l'orifice d'éjection (16), en fonction du temps.

15. Procédé selon la revendication 1, caractérisé en ce qu'on commande la fermeture du canal de liaison (7) allant de chaque chambre d'accumulation (3) à l'orifice d'éjection (16) en fonction de la longueur de l'ébauche extrudée, cette longueur étant mesurée par exemple au moyen d'une barrière à cellule photo-électrique.

16. Procédé selon la revendication 1, caractérisé en ce qu'on commande l'ouverture du canal de liaison (7) allant de chaque chambre d'accumulation (3) en fonction d'une valeur prédéterminée de la course de retour de l'organe de refoulement (5) prévu pour assurer la vidange de chaque chambre d'accumulation (3), cette valeur de la course de retour de l'organe de refoulement correspondant au remplissage correct de la chambre d'accumulation (3) concernée.

17. Procédé selon la revendication 1, caractérisé en ce qu'on commande en fonction du temps l'ouverture du canal de liaison (7) allant de chaque chambre d'accumulation (3) à l'orifice d'éjection (16).

18. Procédé selon la revendication 17, caractérisé en ce qu'on commande l'ouverture du canal de liaison (7) allant de chaque chambre d'accumulation (3) à l'orifice d'éjection (16) au moment où la machine de moulage par soufflage associée atteint un point prédéterminé de son cycle de fonctionnement.

19. Procédé selon l'une des revendications 1 et 2, caractérisé en ce que, en cas de risque de légers battements de pression pendant la phase de vidange, par exemple faute d'une commande de variation d'épaisseur de la paroi de l'ébauche ou si cette commande n'assure que de faibles variations, on fait manoeuvrer à vitesse constante pendant la phase de vidange l'organe de refoulement (5) qui assure la vidange de chaque chambre d'accumulation (3), et en ce qu'on agit sur le système moteur (12,13) de l'organe de refoulement (5) associé à chaque chambre d'accumulation (3), pour maintenir la pression dans la tête d'extrusion pendant la phase de remplissage, dans une plage qui correspond au moins approximativement à la plage des pressions qui existent pendant la phase de vidange.

20. Dispositif pour fabriquer des corps creux en matière plastique dont la paroi est constituée d'une matière laminée faite d'au moins deux couches, en opérant par extrusion-soufflage au moyen d'une machine d'extrusion, alimentée par au moins deux extrudeuses et comportant une tête d'extrusion commune (1) pourvue d'un orifice d'éjection (16) de forme annulaire, la machine d'extrusion comportant au moins une chambre d'accumulation (3) pour recevoir en attente la matière plastifiée provenant des extrudeuses en débit continu, et au moins un organe de refoulement (5) pouvant être animé d'un mouvement de va-et-vient entre deux positions extrêmes pour assurer la vidange de chaque chambre d'accumulation (3), afin de réaliser une ébauche à mouler, ce dispositif comportant en outre un moule de soufflage (29) en plusieurs parties ayant des bords coupants qui fonctionnent par écrasement de la matière à mouler, ce moule de soufflage contenant au moins une cavité de moulage adaptée à recevoir au moins une partie de la zone médiane de l'ébauche à mouler, pour transformer par expansion cette ébauche en corps creux sous l'effet d'une surpression interne, les deux extrémités de cette ébauche étant prévues pour être sectionnées et mises au rebut, et l'intérieur de la tête d'extrusion (1) comportant au moins une zone de formation de la matière laminée, où se rejoignent les courants de matière plastique (8,9,10) destinés à constituer chaque couche élémentaire de la matière laminée obtenue par réunion de ces courants, la zone de formation de la matière laminée étant reliée à l'orifice d'éjection (16) par un canal de liaison (7) dans lequel s'écoule la matière laminée en direction de cet orifice, caractérisé en ce qu'il comporte au moins un organe d'obturation (23) de préférence à mouvement de va-et-vient pour obturer le canal de liaison (7), cet organe d'obturation servant à déclencher la phase de vidange ou la phase de remplissage, un système moteur (12,13) étant prévu par ailleurs pour l'organe de refoulement (5) qui assure la vidange de chaque chambre d'accumulation (3), ce système moteur pouvant être actionné même pendant la phase de remplissage, de manière à agir sur la pression qui existe dans la tête d'extrusion pendant les périodes transitoires entre remplissage-vidange et entre vidange-remplissage, afin d'éviter, au moins dans chaque zone de formation de la matière laminée, toute variation de pression susceptible d'affecter défavorablement la formation de cette matière.

21. Dispositif selon la revendication 20, caractérisé en ce que l'on peut fermer le canal de liaison (7) au moyen de l'organe d'obturation (23) dans la zone qui est délimitée par le noyau d'extrusion (18) et la partie du corps (2) qui entoure ce noyau.

22. Dispositif selon la revendication 20, caractérisé en ce que la partie de l'organe d'obturation (23) qui agit dans le canal de liaison (7) présente un volume d'encombrement réduit, pour affecter un volume de matière laminée aussi faible que possible à l'intérieur du canal de liaison (7) à chaque manoeuvre de fermeture de ce canal.

23. Dispositif selon la revendication 20, caractérisé en ce que l'organe moteur (24,25) de l'organe d'obturation (23) comporte un vérin hydraulique logé à l'intérieur de la tête d'extrusion (1).

24. Dispositif selon la revendication 20, caractérisé en ce que la tête d'extrusion comporte au moins une sonde manométrique (27) pour mesurer la pression au sein de la matière laminée qui se trouve dans la tête d'extrusion.

25. Dispositif selon la revendication 24, caractérisé en ce que la sonde manométrique (27) est montée au voisinage de la zone de formation de la matière laminée.

26. Dispositif selon la revendication 20, caractérisé en ce que la sonde manométrique (27) est montée au voisinage de la face active (6) de l'organe de refoulement servant à la vidange de chaque chambre d'accumulation (3).
